# EUROPEAN PATENT SPECIFICATION

(11) **EP 4 137 550 B1**
(45) Date of publication and mention of the grant of the patent: **24.09.2025**
(21) Application number: 21788533.4
(22) Date of filing: 14.04.2021
(51) Int. Cl.: C09J 175/04, C09J 7/38, C08G 18/12, C08G 18/24, C08G 18/42, C08G 18/79, C09J 175/06, C08G 18/80

(54) **ADHESIVE AGENT COMPOSITION AND ADHESIVE SHEET**
HAFTMITTELZUSAMMENSETZUNG UND HAFTFOLIE
COMPOSITION D'AGENT ADHÉSIF ET FEUILLE ADHÉSIVE

(30) Priority: 17.04.2020 JP 2020073982
(43) Date of publication of application: 22.02.2023
(73) Proprietor: artience Co., Ltd., Tokyo (JP); Toyochem Co., Ltd., Chuo-ku Tokyo 1048379 (JP)
(72) Inventor: MIYAZAWA, Go, Tokyo 104-8379 (JP); ITO, Mitsuhito, Tokyo 104-8379 (JP)
(74) Representative: SSM Sandmair
(86) International application number: PCT/JP2021/015448
(87) International publication number: WO 2021/210608

(56) References cited:
- EP-A1- 2 311 896
- EP-A1- 2 770 004
- EP-A1- 2 930 196
- WO-A1-2014/088023
- JP-A- 2004 231 797
- JP-A- 2006 131 705
- JP-A- 2010 037 463
- JP-A- 2015 218 298

## Description

### TECHNICAL FIELD

Embodiments of the present invention relate to an adhesive agent composition and an adhesive sheet that uses that composition.

### BACKGROUND ART

Adhesive agents which, for example, constitute the adhesive labels used for containers typically contain raw materials derived from petroleum. Following use, these adhesive labels are sometimes peeled from the container, or left adhered to the container, and disposed of in landfills. In such cases, because the degradation speed of the adhesive agent that constitutes the adhesive label is extremely slow, the adhesive agent remains in the soil semi-permanently, and can also cause destruction of ecological systems within the soil. Further, when products containing raw materials derived from petroleum are incinerated, carbon dioxide is generated, which is one of the causes of global warming. For these types of reasons, in recent years, the use of biodegradable raw materials, or the use of biomass-derived raw materials which are recyclable, is starting to be recommended.

Polyester polymers that use biodegradable raw materials or biomass-derived raw materials are already known as potential raw materials for adhesive agent compositions. Patent Document 1 discloses an adhesive agent composition containing a biodegradable polyester polymer obtained by copolymerizing lactic acid and caprolactone, a tackifier resin, and an isocyanate curing agent.

Further, Patent Document 2 discloses an adhesive agent composition containing a polyester polymer which is obtained by copolymerizing lactic acid, a dibasic acid and a glycol component, and has a glass transition temperature of -70 to -20°C, a weight average molecular weight of 20,000 to 300,000, and a hydroxyl value of 1 to 100 mgKOH/g. Additionally, Patent Document 3 discloses a water dispersion type biodegradable adhesive comprising a copolymer polyurethane resin having a poly(hydroxycarboxylic acid) segment and a pendant carboxyl group, which has high initial adhesive strength and can retain adhesive strength for a long period of time without suffering a decrease in adhesive strength with elapse.

However, with adhesive agent compositions using the polyester polymers disclosed in Patent Document 1 and Patent Document 2, achieving satisfactory adhesive characteristics has proven difficult. In particular, in the above polyester polymers, the main linkage sites in the polymer chain are ester linkages, meaning the wetting of the substrate is inadequate, and therefore the removability is unsatisfactory. Moreover, under moisture and heat resistance conditions, the above polyester polymers tend to suffer from cohesive failure during peeling due to hydrolysis of the ester groups, meaning substrate contamination tends to often occur. Further, because the ester linkages of the main linkage sites enhance the crystallinity of the lactic acid, the substrate adhesiveness at low temperature is unsatisfactory, and poor adhesive strength at low temperature is a problem.

### PRIOR ART DOCUMENTS

### PATENT DOCUMENTS

Patent Document 1: JP 2004-231797 A
Patent Document 2: JP 2010-37463 A Patent Document 3: EP 2770 004 A1

### SUMMARY OF THE INVENTION

### PROBLEMS TO BE SOLVED BY THE INVENTION

As outline above, conventional adhesive agent compositions containing a polyester polymer that uses either a biodegradable raw material or a recyclable biomass-derived raw material are unable to fully satisfy the requirements for satisfactory adhesive characteristics, low substrate contamination in moisture and heat resistance testing, and satisfactory substrate adhesiveness at low temperature.

Accordingly, embodiments of the present invention provide an adhesive agent composition which uses a biodegradable raw material or a biomass-derived raw material, and exhibits excellent adhesive characteristics, and superior levels of substrate contamination and substrate adhesiveness at low temperature.

### MEANS TO SOLVE THE PROBLEMS

The inventors of the present invention conducted intensive investigations aimed at addressing the issues described above, enabling them to complete the present invention. In other words, embodiments of the present invention relate to the following embodiments.

One embodiment of the present invention relates to an adhesive agent composition containing a urethane prepolymer (A) having a hydroxyl group that is a reaction product of a polyol (ax), a polyfunctional polyol (ay) (excluding the polyol (ax)), and a polyisocyanate (az), wherein
the polyol (ax) is a copolymer of a monomer mixture including a monomer (ax'1) having a lactic acid unit, and a monomer (ax'2) having at least one of a lactone unit and an aliphatic hydroxycarboxylic acid unit (but excluding lactic acid),
the number average molecular weight of the polyol (ax) is within a range from 1,000 to 45,000, and
the urethane prepolymer (A) having a hydroxyl group has a glass transition temperature within a range from -60°C to -10°C.

Another embodiment of the present invention relates to an adhesive sheet having a substrate, and an adhesive layer formed from the adhesive agent composition of the embodiment described above on at least one surface of the substrate.

### EFFECTS OF THE INVENTION

The present invention is able to provide an adhesive agent composition which has a high degree of biomass and a high usage ratio of biodegradable raw materials, exhibits satisfactory adhesive characteristics, and also exhibits excellent substrate contamination properties in moisture and heat resistance testing and excellent substrate adhesiveness at low temperature. Further, the invention can also provide an adhesive sheet that uses this adhesive agent composition.

### EMBODIMENTS FOR CARRYING OUT THE INVENTION

Prior to the description of the present invention, a series of terms are defined.

The term "adhesive sheet" used in the description means a sheet which includes a substrate, and an adhesive layer formed from a cured product of the adhesive agent composition of the present invention.

In this description, numerical ranges specified using the expression "a to b" indicate a range that includes the numerical values before and after the "to" as the minimum value and maximum value respectively.

Unless specifically stated otherwise, for all components mentioned in this description, a single material may be used alone, or a combination of two or more materials may be used.

In this description, the monomer (ax'1) having a lactic acid unit, the monomer (ax'2) having at least one of a lactone unit and an aliphatic hydroxycarboxylic acid unit, and the other monomers (ax'3) may sometimes be abbreviated as the monomer (ax'1), the monomer (ax'2) and the monomer (ax'3) respectively. Further, the urethane prepolymer (A) having a hydroxyl group may sometimes be abbreviated as the urethane prepolymer (A).

In this description, "Mw" is the polystyrene-equivalent weight average molecular weight determined by gel permeation chromatography (GPC) measurement. Further, "Mn" is the polystyrene-equivalent number average molecular weight determined by gel permeation chromatography (GPC) measurement. These values can be measured using the method described below in the "Examples" section.

Embodiments of the present invention are described below in detail. It should be noted that the following descriptions are merely examples (representative examples) of embodiments of the present invention, and provided the scope of the invention is not exceeded, the present invention is not limited to the content of these embodiments.

### <1> Adhesive Agent Composition

The adhesive agent composition that represents one embodiment of the present invention contains at least a urethane prepolymer (A) having a hydroxyl group. If necessary, the adhesive agent composition may also contain a curing agent, a tackifier resin, a plasticizer, or any of various other optional components. The adhesive agent composition may also contain a solvent.

By incorporating a specific urethane prepolymer (A) having a urethane linkage within the molecule, the adhesive agent composition that represents one embodiment of the present invention is able to provide improved substrate wettability and excellent removability. Further, in moisture and heat resistance testing, because degradation of the linkage sites in the polymer is suppressed, substrate contamination is low. Moreover, because crystallinity derived from lactic acid in the polymer is suppressed, not only are the adhesive characteristics excellent, but the substrate adhesiveness at low temperature is also favorable, enabling these performance criteria to be satisfied.

### <Urethane Prepolymer (A)>

The urethane prepolymer (A) is a urethane prepolymer having a hydroxyl group, and is a reaction product of a polyol (ax), a polyfunctional polyol (ay) (excluding the polyol (ax)), and a polyisocyanate (az).

The above expression "reaction product" means a product obtained by the reaction of the polyol (ax), the polyfunctional polyol (ay) and the polyisocyanate (az). The polyol (ax) preferably has two hydroxyl groups within each molecule. Further, the polyfunctional polyol (ay) preferably has two or more hydroxyl groups within each molecule. The polyisocyanate (az) is preferably a difunctional isocyanate (also called a diisocyanate) having two isocyanate groups within each molecule. The polyisocyanate (az) is used in a molar ratio (NCO/OH) that ensures the isocyanate groups (isocyanato groups) in the polyisocyanate (az) are fewer than the total amount of hydroxyl groups in the polyol (ax) and the polyfunctional polyol (ay). As a result, the obtained urethane prepolymer is a urethane prepolymer having a hydroxyl group.

The polyol (ax) is a copolymer of a monomer mixture including a monomer (ax'1) having a lactic acid unit, and a monomer (ax'2) having at least one of a lactone unit and an aliphatic hydroxycarboxylic acid unit (but excluding lactic acid). By including the monomer (ax'1) and the monomer (ax'2), the monomer mixture that forms the polyol (ax) is able to appropriately control the glass transition temperature of the urethane prepolymer (A) and the crystallinity derived from lactic acid, meaning satisfactory substrate adhesiveness and adhesive strength can be obtained at low temperature.

The number average molecular weight (Mn) of the above polyol (ax) may be within a range from 1,000 to 45,000. By ensuring the Mn value falls within this range, an appropriate level of urethane linkages can be introduced. By introducing urethane linkages, degradation of linkage sites in the polymer during moisture and heat resistance testing is suppressed, and substrate contamination is lowered. Further, an increase in the cohesive force yields an improvement in adhesive strength. Moreover, the wetting characteristics improve, and the removability also improves.

The glass transition temperature (Tg) of the above urethane prepolymer (A) is within a range from -60°C to -10°C. The Tg value is more preferably within a range from -50°C to - 12°C, and even more preferably from -45°C to -15°e.

When the glass transition temperature falls within the above range, an appropriate cohesive force is achieved as a result of intertwining of the polymer chains, and satisfactory adhesive strength can be obtained. Specifically, when the glass transition temperature is adjusted to a value of -60°C or higher, satisfactory cohesive force is achieved, and the adhesive strength can be easily increased. Further, when the glass transition temperature is adjusted to -10°C or lower, the cohesive force at low temperature can be prevented from becoming excessively high, and superior substrate adhesiveness at low temperature and superior adhesive characteristics can be more easily obtained.

In one embodiment, the urethane prepolymer (A) is a urethane prepolymer having a hydroxyl group that is a reaction product of the polyol (ax) with a number average molecular weight of 1,000 to 45,000, the polyfunctional polyol (ay) (excluding the polyol (ax)) and the polyisocyanate (az), and has a glass transition temperature of -60°C to -10°C.

As described above, by using the polyol (ax) having a number average molecular weight of 1,000 to 45,000, and forming the urethane prepolymer (A) with a glass transition temperature within a range from -60°C to -10°C, even in those cases where the biomass raw materials or biodegradable raw materials of the monomer (ax'1) and the monomer (ax'2) are used in large amounts in order to enhance the degree of biomass and the usage ratio of biodegradable raw materials, an adhesive agent composition that exhibits excellent results in terms of substrate contamination in moisture and heat resistance testing, substrate adhesiveness at low temperature, and adhesive characteristics can be produced with ease.

The weight average molecular weight of the urethane prepolymer (A) is preferably within a range from 10,000 to 200,000, more preferably from 30,000 to 180,000, and even more preferably from 40,000 to 150,000. When the weight average molecular weight of the urethane prepolymer (A) is adjusted a value within the above range, an appropriate cohesive force can be achieved as a result of intertwining of the polymer chains, and the adhesive strength can be easily enhanced. Furthermore, in addition to this increase in adhesive strength, an improvement in the wetting characteristics and an improvement in the cohesive force can also be achieved as a result of the urethane linkages formed by urethanization, and therefore the composition can be more easily imparted with favorable removability and the adhesive strength can be more easily increased. In particular, adjusting the weight average molecular weight to a value of 200,000 or lower is preferred in terms of suppressing any reduction in the holding force caused by a reduction in the cohesive force.

The constituent components of the adhesive agent composition are described more specifically below.

### [Polyol (ax)]

In one embodiment, the polyol (ax) is obtained by copolymerization of a monomer mixture including the monomer (ax'1) having a lactic acid unit, and the monomer (ax'2) having at least one of a lactone unit and an aliphatic hydroxycarboxylic acid unit (but excluding lactic acid The above monomer mixture also contains another monomer (ax'3). By appropriate selection of that other monomer (ax'3), the molecular weight of the polyol can be easily controlled, and a polyol (ax) having the desired number average molecular weight can be obtained with ease.

Based on the total mass of the monomer mixture that constitutes the polyol (ax), the total content of the monomer (ax'1) and the monomer (ax'2) is within a range from 10 to 99.8% by mass, more preferably from 50 to 99.8% by mass, and even more preferably from 60 to 99.8% by mass. A total content that falls within the above range is preferred in terms of enabling the glass transition temperature of the urethane prepolymer (A) to be easily adjusted to a value within a suitable range, and enabling the adhesive characteristics to be easily improved.

In those cases where it is desirable to increase the degree of biomass or the usage ratio of biodegradable raw materials, the content of at least one biomass raw material or biodegradable raw material among the monomer (ax'1) and the monomer (ax'2) is preferably increased. In one embodiment, it is particularly preferable that the monomer (ax'1) and the monomer (ax'2) are both monomers from biomass raw materials or biodegradable raw materials. In another embodiment, in order to increase the degree of biomass or the usage ratio of biodegradable raw materials, the content of a monomer (ax'3) that is a biomass raw material or a biodegradable raw material may be increased.

According to the adhesive agent composition of one embodiment of the present invention, even when the monomer (ax'1) and the monomer (ax'2) are used in large amounts, or the amount of the monomer (ax'3) is increased, in order to increase the degree of biomass or the usage ratio of biodegradable raw materials, an adhesive agent composition can be provided which not only exhibits excellent adhesive characteristics, but also exhibits superior levels of substrate contamination in moisture and heat resistance testing, and superior substrate adhesiveness at low temperature.

The ratio (ax'1)/(ax'2) between the amount of the monomer (ax'1) and the amount of the monomer (ax'2) in the monomer mixture that constitutes the polyol (ax) is within a range from 10/90 to 90/10, preferably from 20/80 to 80/20, and more preferably from 30/70 to 70/30. In one embodiment, the above ratio (ax'1)/(ax'2) is still more preferably within a range from 40/60 to 60/40, and is most preferably 50/50.

By adjusting the ratio (ax'1)/(ax'2) to a value within the above range, the desired adhesive characteristics can be obtained easily, even when the degree of biomass in the adhesive agent is high and the usage ratio of biodegradable raw materials is high.

The number average molecular weight (Mn) of the polyol (ax) may be 1,000 or greater, and is preferably 2,500 or greater. On the other hand, this Mn value is typically not more than 45,000, and is preferably not more than 40,000, more preferably not more than 37,000, and even more preferably 35,000 or less.

In one embodiment, the above Mn value may be within a range from 1,000 to 45,000. This Mn value may be preferably from 1,000 to 35,000, and more preferably from 2,500 to 35,000.

When the above Mn value is adjusted to a value within the above range, the wetting characteristics and cohesive force provided by the urethane linkages can be controlled with ease. Specifically, when the Mn value is adjusted to 1,000 or greater, the number of polymer urethane linkages obtained by urethanization can be prevented from becoming overly large. In other words, during testing under heating such as under moisture and heat resistance conditions, an excessive increase in adhesiveness accompanying the rearrangement of urethane groups that can lead to cohesive failure can be suppressed, making it easy to improve the substrate contamination properties. Further, when the Mn value is adjusted to a value of not more than 45,000, problems such as an insufficient number of urethane linkages, and a deterioration in the moisture and heat resistance and the removability can be suppressed.

In one embodiment, from the viewpoint of more easily obtaining superior removability, the Mn value of the polyol (ax) may exceed 10,000, but be not more than 35,000. This Mn value may be more preferably within a range from 11,000 to 30,000, and even more preferably from 11,000 to 25,000.

In another embodiment, the Mn value of the polyol (ax) may be within a range from 1,000 to 10,000, and may be more preferably from 2,000 to 7,500.

### (Monomer (ax'1))

There are no particular limitations on the monomer (ax'1) having a lactic acid unit, provided it has a lactic acid unit. Examples include lactic acids (ax'1-1) such as L-lactic acid and D-lactic acid, and lactides (ax'1-2) such as L-lactide, D-lactide, DL-lactide and meso-lactide. By copolymerizing this type of monomer (ax'1) having a lactic acid unit with the monomer (ax'2) described below, a urethane prepolymer (A) with the desired characteristics can be obtained. A single monomer (ax'1) having a lactic acid unit may be used alone, or a combination of two or more such monomers may be used.

The expression "lactic acid unit" used in this description means an -O-CH(CH₃)-CO-unit which represents a partial structure of lactic acid.

Among the lactic acids (ax'1-1) and the lactides (ax'1-2), the lactides (ax'1-2) are particularly preferred. From the viewpoint of reactivity, lactides offer excellent copolymerizability and can lower the degree of crystallinity, and as a result, enable the removability to be improved with ease.

The lactic acids (ax'1-1) and the lactides (ax'1-2) are biomass-derived raw materials, and are also biodegradable raw materials. Among these monomers, from the viewpoints of reaction control during polyol production and the solubility in solvents, the lactides (ax'1-2) are preferred. The lactide (ax'1-2) includes at least one compound selected from the group consisting of L-lactide, D-lactide, DL-lactide and meso-lactide. DL-lactide means an equimolar mixture of L-lactide and D-lactide.

From the viewpoints of lowering the degree of crystallinity derived from lactic acid and improving the substrate adhesiveness at low temperature, the lactide (ax'1-2) is preferably a combination of L-lactide and D-lactide, DL-lactide, or meso-lactide. From the viewpoints of improving the amorphous properties and the wetting characteristics, and further improving the removability, meso-lactide is particularly preferred.

When a combination of L-lactide and D-lactide is used, the weight ratio of L-lactide/D-lactide is preferably within a range from 5/95 to 95/5, and is more preferably from 15/85 to 85/15. By using a weight ratio within this range, the degree of crystallinity of the lactic acid in the urethane prepolymer (A) can be lowered, and the substrate adhesiveness at low temperature can be improved.

In one embodiment, the monomer (ax'1) having a lactic acid unit preferably includes at least meso-lactide. In one embodiment, in addition to the meso-lactide, the monomer (ax'1) having a lactic acid unit may also include another lactide such as L-lactide, D-lactide or DL-lactide. For example, in the production of meso-lactide, in the purification stage, lactides other than meso-lactide are removed. But, in an embodiment of the present invention, the unpurified meso-lactide may be used. In other words, the meso-lactide may contain at least one of L-lactide, D-lactide and DL-lactide.

The amount of the monomer (ax'1), based on the total mass of the monomer mixture that constitutes the polyol (ax), is preferably within a range from 5 to 92% by mass, and more preferably from 15 to 70% by mass. Adjusting the above amount to a value within this range is preferred in terms of enabling appropriate adjustment of the glass transition temperature of the urethane prepolymer (A), and enabling superior substrate adhesiveness at low temperature and superior adhesive characteristics to be more easily achieved.

### Monomer (ax'2)

The monomer (ax'2) is a monomer having at least one of a lactone unit and an aliphatic hydroxycarboxylic acid unit. In one embodiment, either a single monomer or a combination of two or more monomers may be used as the monomer (ax'2).

In one embodiment, the monomer (ax'2) may be at least one of a monomer (ax'2-1) having an aliphatic hydroxycarboxylic acid unit (but excluding lactic acid), and a monomer (ax'2-2) having a lactone unit. In one embodiment, the monomer (ax'2) preferably includes at least the monomer (ax'2-2) having a lactone unit.

By copolymerizing this monomer (ax'2) with the monomer (ax'1) having a lactic acid unit, the degree of crystallinity of the lactic acid component in the urethane prepolymer (A) can be reduced, and the glass transition temperature can be adjusted to a value within a suitable range. As a result, a urethane prepolymer (A) can be obtained which is capable of realizing characteristics such as excellent adhesive strength for the adhesive agent composition.

Examples of the monomer (ax'2-1) having an aliphatic hydroxycarboxylic acid unit include glycolic acid, 3-hydroxybutyric acid, 4-hydroxybutyric acid, 3-hydroxyvaleric acid, 4-hydroxyvaleric acid, and 6-hydroxycaproic acid.

Examples of the monomer (ax'2-2) having a lactone unit include lactones of 3 to 12 carbon atoms. Specific examples include β-propiolactone, β-butyrolactone, δ-valerolactone, ε-caprolactone, enanatholactone, caprylolactone, and laurolactone.

Among the monomers (ax'2-1) having an aliphatic hydroxycarboxylic acid unit and the monomers (ax'2-2) having a lactone unit, a monomer (ax'2-2) having a lactone unit is preferred. The monomer (ax'2-2) having a lactone unit exhibits excellent copolymerizability in terms of reactivity, and enables the degree of crystallinity of the lactic acid component to be lowered with ease, meaning removability can be easily improved.

Among the various monomers (ax'2-2) having a lactone unit, from the viewpoints of biodegradability, ε-caprolactone or 6-hydroxycaproic acid is preferred. A single monomer (ax'2-2) having a lactone unit may be used alone, or a combination of two or more such monomers may be used.

The amount of the monomer (ax'2), based on the total mass of the monomer mixture that constitutes the polyol (ax), is preferably within a range from 5 to 92% by mass, and more preferably from 18 to 70% by mass. Adjusting the above amount to a value within this range is preferred in terms of enabling appropriate adjustment of the glass transition temperature of the urethane prepolymer (A), and enabling superior substrate adhesiveness at low temperature and superior adhesive characteristics to be more easily achieved.

### (Monomer (ax'3))

The monomer (ax'3) is another monomer besides the monomer (ax'1) and the monomer (ax'2), and there are no particular limitations on this other monomer (ax'3), provided it exhibits reactivity with the monomer (ax'1) and the monomer (ax'2). Examples of compounds that may be used as the monomer (ax'3) include polyols such as aliphatic glycols, polyester polyols that are reaction products of an aliphatic dibasic acid and a glycol, polyether polyols, polybutadiene polyols, and castor oil polyols. In those cases where the monomer mixture that constitutes the polyol (ax) also contains this other monomer (ax'3), the degree of crystallinity of the lactic acid component in the urethane prepolymer (A) can be more easily lowered.

In order to increase the degree of biomass or the biodegradable raw material content, the monomer (ax'3) is also preferably either a biomass-derived raw material or a biodegradable raw material. In one embodiment, a polyester polyol can be used particularly favorably as the monomer (ax'3). In those cases where a polyester polyol is used, the monomer (ax'3) exhibits excellent compatibility with the monomers (ax'1) and (ax'2), and as a result of the improvement in copolymerizability, the degree of crystallinity of the lactic acid component can be reduced, and the removability can be more easily improved.

There are no particular limitations on the aliphatic glycols that may be used as the monomer (ax'3). Examples include ethylene glycol, 1,2-propylene glycol, 1,3-propanediol, 2-methyl-1,3-propanediol, 1,2-butanediol, 1,3-butanediol, 1,4-butanediol, 1,5-pentanediol, 1,6-hexanediol, 3-methyl-1,5-pentanediol, neopentyl glycol, diethylene glycol, dipropylene glycol, 2,2,4-trimethyl-1,5-pentanediol, 2-ethyl-2-butylpropanediol, 1,9-nonanediol, 2-methyloctanediol, 1,10-decanediol, 1,4-cyclohexanedimethanol, and 1,2-cyclohexanedimethanol. In terms of being obtainable from a biomass-derived raw material and being a biodegradable raw material, 1,2-propylene glycol and 1,3-propanediol are particularly preferred. One of these aliphatic glycols may be used alone, or a combination of two or more such aliphatic glycols may be used.

The polyester polyols that may be used as the monomer (ax'3) may be obtained, for example, by a condensation reaction between an aliphatic dibasic acid and an aliphatic glycol. The polyester polyol preferably includes an aliphatic polyester polyol having a terminal hydroxyl group, so that the COOH/OH molar ratio is less than 1.0. This type of aliphatic polyester polyol differs from an aromatic polyester polyol, and is preferred due to the large number of enzymes in the natural world that are capable of degrading aliphatic polyester polyols.

Examples of the above aliphatic dibasic acid include aliphatic and alicyclic dicarboxylic acids such as adipic acid, azelaic acid, sebacic acid, 1,4-cyclohexanedicarboxylic acid, 4-methyl-1,2-cyclohexanedicarboxylic acid, dodecenylsuccinic anhydride, fumaric acid, succinic acid, dodecanedioic acid, hexahydrophthalic anhydride, tetrahydrophthalic anhydride, maleic acid, maleic anhydride, itaconic acid and citraconic acid. In terms of being obtainable from a biomass-derived raw material and being a biodegradable raw material, sebacic acid and succinic acid are particularly preferred. One of these aliphatic dibasic acids may be used alone, or a combination of two or more such aliphatic dibasic acids may be used. On the other hand, the aliphatic glycols are as described above.

An aromatic dibasic acid may also be used as a raw material for the polyester polyol, provided there is no significant deterioration in the characteristics desired of the adhesive agent in the present invention, the degree of biomass in the adhesive agent, and the proportion of biodegradable raw materials used in the adhesive agent.

There are no particular limitations on the aromatic dibasic acids that may be used. Examples include terephthalic acid, isophthalic acid, ortho-phthalic acid, 1,5-naphthalenedicarboxylic acid, 2,6-naphthalenedicarboxylic acid, 4,4'-diphenyldicarboxylic acid, 2,2'-diphenyldicarboxylic acid, and 4,4-diphenyl ether dicarboxylic acid. One of these compounds may be use alone, or a combination of two or more such compounds may be used.

In the polyester polyol, the lower the number of carbon atoms in the alkylene chain of the aliphatic dibasic acid used during production, the more the hard segment phase increases in the polymer. As a result, the penetration of moisture can be effectively prevented, and the moisture and heat resistance tend to be more easily improved. Further, from a similar viewpoint, the alkylene chain of the aliphatic glycol also preferably has a small number of carbon atoms.

From this type of viewpoint, in one embodiment, the polyester polyol described above may be, for example, a polymer formed from an aliphatic dibasic acid having an alkylene chain of 2 to 12 carbon atoms, and an aliphatic glycol having an alkylene chain with a linear or branched structure containing 2 to 10 carbon atoms.

The above aliphatic dibasic acid is, for example, preferably at least one compound selected from the group consisting of oxalic acid, malonic acid, succinic acid, glutaric acid, adipic acid, pimelic acid, suberic acid, azelaic acid, sebacic acid, undecanedioic acid and dodecanedioic acid. Among these, in terms of being obtainable from a biomass-derived raw material and also being a biodegradable raw material, sebacic acid and succinic acid are more preferred, and succinic acid is even more desirable.

Further, the above aliphatic glycol is, for example, preferably at least one compound selected from the group consisting of ethylene glycol, 1,2-propylene glycol, 1,3-propanediol, 2-methyl-1,3-propanediol, 1,2-butanediol, 1,3-butanediol, 1,4-butanediol, 1,5-pentanediol, 1,6-hexanediol, 1,7-heptanediol, 1,8-octanediolo, 1,9-nonanediol, 1,10-decanediol, neopentyl glycol, 3-methyl-1,5-pentanediol, and 2-methyloctanediol. Among these, 1,2-propylene glycol, and 1,3-propanediol are more preferred, and 1,3-propanediol is even more desirable.

In one embodiment, a commercially available product may be used as the polyester polyol. Examples include KURARAY POLYOL P-1010 and P-2010 manufactured by Kuraray Co., Ltd. These products are copolymers of adipic acid and 3-methyl-1,5-pentanediol.

Examples of polyether polyols that may be used as the monomer (ax'3) include reaction products obtained by the addition polymerization of one or more oxirane compounds, using an active hydrogen-containing compound having two active hydrogens per molecule as an initiator.

Examples of the above oxirane compounds include alkylene oxides (AO) such as ethylene oxide (EO), propylene oxide (PO) and butylene oxide (BO), and tetrahydrofuran (THF).

In one embodiment, a commercially available product may be used as the polyether polyol. Examples include SANNIX PP-600 (a polyoxypropylene glycol) manufactured by Sanyo Chemical Industries, Ltd.

Examples of polybutadiene-modified polyols that may be used as the monomer (ax'3) include linear or branched polybutadienes having two or more hydroxyl group terminals, and having a structure with a 1,2-vinyl region, a 1,4-cis region, a 1,4-trans region, or a hydrogenated structure of one of these regions.

Examples of castor oil polyols that may be used as the monomer (ax'3) include polyols derived from castor oil, and polyols obtained by modifying castor oil.

Examples of the above polyols derived from castor oil include fatty acid ester polyols derived from castor oil, such as compounds in which a portion of the ricinoleic acid of the glycerol esters has been substituted with oleic acid, compounds obtained by saponification of castor oil, in which the ricinoleic acid has been esterified with a short-chain polyol, and mixtures of these compounds with castor oil.

Examples of the above polyols obtained by modifying castor oil include vegetable oil-modified polyols, and modified polyols having an aromatic skeleton (such as bisphenol A). Vegetable oil-modified polyols are obtained by substituting a portion of the ricinoleic acid of the glycerol esters with a fatty acid obtained from another plant, for example, high fatty acid such as linoleic acid, linolenic acid or oleic acid obtained from soybean oil, rapeseed oil, or olive oil.

Examples of commercially available products of castor oil-derived polyols include URIC HF-1300, Y-403 and HF-2009 manufactured by Itoh Oil Chemicals Co., Ltd.

In one embodiment, the number average molecular weight (Mn) of the above monomer (ax'3) is preferably within a range from 50 to 3,000, and is more preferably from 500 to 2,000. In one embodiment, the Mn value of the polyester polyol used as the monomer (ax'3) is preferably within a range from 150 to 3,000, more preferably from 200 to 2,000, and even more preferably from 200 to 800.

When a monomer (ax'3) having an Mn value within the above range is used, the degree of crystallinity of the component derived from the monomer (ax'3) is low, and therefore the degree of crystallinity of the lactic acid component in the urethane prepolymer (A) tends to be able to be reduced with ease. As a result, the removability and the moisture and heat resistance can be more easily improved.

In one embodiment, from the viewpoint of achieving satisfactory reactivity in the urethanization, the monomer mixture that constitutes the polyol (ax) preferably does not contain compounds having an active hydrogen such as a hydroxyl group at only one terminal, and compounds in which acidic groups have formed a salt such as a sulfonate salt. Accordingly, in one embodiment, the monomer mixture that constitutes the polyol (ax) is preferably composed of only the monomer (ax'1), the monomer (ax'2) and the monomer (ax'3).

### (Method for Producing Polyol (ax))

There are no particular limitations on the method used for producing the polyol (ax). The polyol (ax) can be produced by a conventional polymerization method such as a bulk polymerization method or a solution polymerization method. Examples of procedures for the production method are described below.

(Procedure 1) A method in which a lactic acid is used as the monomer (ax'1) and an aliphatic hydroxycarboxylic acid is used as the monomer (ax'2) for the raw materials, and these compounds are subjected to a direct dehydration polycondensation (for example, the production method disclosed in USP 5,310,865).

(Procedure 2) A ring-opening polymerization method in which a lactide is used as the monomer (ax'1) and a lactone is used as the monomer (ax'2), and these compounds are subjected to a melt polymerization (for example, the production method disclosed in USP 2,758,987). In this (Procedure 2), all of the lactide and the lactone undergo ring-opening, yielding a polyol containing a lactic acid unit and an aliphatic hydroxycarboxylic acid unit.

(Procedure 3) A method in which a polymer is produced using a lactic acid and an aliphatic hydroxycarboxylic acid, by conducting a dehydration polycondensation reaction in the presence of a catalyst, wherein at least a portion of the steps are conducted as a solid phase polymerization.

Further, in the above (Procedure 1) to (Procedure 3), the polyol (ax) may also be obtained by also copolymerizing other monomers such as an aliphatic glycol and an aliphatic dibasic acid.

In the above (Procedure 1) to (Procedure 3), the polyol (ax) obtained by the copolymerization of the lactic acid monomer (ax'1-1) and the aliphatic hydroxycarboxylic acid (ax'2-1) may sometimes suffer from inadequate copolymerizability of the lactic acid monomer (ax'1-1) and the aliphatic hydroxycarboxylic acid (ax'2-1). As a result, the obtained polyol (ax) may not be able to achieve the desired glass transition temperature and lactic acid-derived crystallinity, and achieving the desired characteristics for the urethane prepolymer (A) may become difficult.

Accordingly, rather than a method for producing the polyol (ax) in accordance with the above (Procedure 1), in which a monomer mixture containing the lactic acid monomer (ax'1-1) and the aliphatic hydroxycarboxylic acid (ax'2-1) is copolymerized, the above (Procedure 2) is preferred. Those cases where, as described in the (Procedure 2), a monomer mixture containing the lactide monomer (ax'1-2) and the lactone monomer (ax'2-2) is used to produce the polyol (ax) are preferred in terms of enabling easier control of the reactivity, achieving superior copolymerizability, and making it easier to achieve a higher molecular weight.

In the production of the polyol (ax), if necessary, a catalyst and a solvent may also be used. The catalyst may be the same as the catalyst described below for production of the urethane prepolymer (A) having a hydroxyl group.

In one embodiment, the amount of the monomer (ax'3), based on the total mass of the monomer mixture that constitutes the polyol (ax), may be at least 0.2% by mass but not more than 90% by mass. In one embodiment, the amount of the monomer (ax'3) is preferably within a range from 3 to 90% by mass, and is more preferably from 10 to 70% by mass. For example, in this embodiment, a polyester polyol having a number average molecular weight of 1,000 to 3,000 can be used favorably as the monomer (ax'3).

In another embodiment, in those cases where a polyester polyol having a number average molecular weight of 200 to 800 is used as the monomer (ax'3), the amount of the monomer (ax'3), based on the total mass of the monomer mixture that constitutes the polyol (ax), is preferably within a range from 0.2 to 10% by mass. This amount is more preferably within a range from 0.7 to 9.5% by mass, and even more preferably from 0.9 to 2.5% by mass.

Adjusting the amount of the monomer (ax'3) to a value within one of the above ranges is preferred in terms of enabling appropriate adjustment of the glass transition temperature of the urethane prepolymer (A), and enabling superior substrate adhesiveness at low temperature and superior adhesive strength to be achieved.

### [Polyfunctional Polyol (ay)]

The polyfunctional polyol (ay) is a compound having two or more hydroxyl groups, and is preferably a compound having three or more hydroxyl groups. By including a compound having three or more hydroxyl groups in the polyfunctional polyol (ay), a branched skeleton can be introduced into the urethane prepolymer (A), and the cohesive force can be improved, meaning the prepolymer can be imparted with favorable initial curability. It should be noted that the polyfunctional polyol (ay) excludes the polyol (ax).

The number average molecular weight of the polyfunctional polyol (ay) is preferably within a range from 100 to 5,000, more preferably from 500 to 3,000, and even more preferably from 800 to 2,000. By ensuring that the number average molecular weight falls within this range, a satisfactory crosslinking density can be achieved through reaction with an isocyanate curing agent (B), thus improving the holding force.

Examples of compounds that may be used as the polyfunctional polyol (ay) include aliphatic polyols, polyester polyols, polyether polyols, polybutadiene polyols and castor oil polyols. Among these, aliphatic polyester polyols are preferred. The polyester polyol is preferably an aliphatic polyester polyol having three or more hydroxyl groups that is either a reaction product of a polyvalent carboxylic acid and an aliphatic glycol, or a reaction product of an aliphatic dibasic acid and an aliphatic polyol. Aliphatic polyester polyols are particularly preferred because they are able to be degraded by a large number of enzymes in the natural world.

Examples of the above polyvalent carboxylic acid include trimellitic acid, pyromellitic acid, benzophenone tetracarboxylic acid, biphenyl tetracarboxylic acid, ethylene glycol bis(anhydrotrimellitate), and glycerol tris(anhydrotrimellitate). On the other hand, examples of the above aliphatic glycols include the same compounds as those listed above in relation to the monomer (ax'3).

Examples of the above aliphatic polyols include glycerol, trimethylolpropane and pentaerythritol. On the other hand, examples of the above aliphatic dibasic acids include the same compounds as those listed above in relation to the monomer (ax'3).

In one embodiment, a commercially available product may be used as the polyfunctional polyol (ay). Examples include SANNIX PP-600 manufactured by Sanyo Chemical Industries, Ltd. This product is a polyoxypropylene glycol that is a copolymer of glycerol, propylene oxide (PO) and ethylene oxide (EO).

Another example is NISSO-PBGI-3000 manufactured by Nippon Soda Co., Ltd. This product is also a polyoxypropylene glycol that is a copolymer of glycerol, propylene oxide (PO) and ethylene oxide (EO).

Yet another example is KURARAY POLYOL F-1010 manufactured by Kuraray Co., Ltd. This product is a polyester polyol with a three-branch structure that is a copolymer of 3-methyl-1,5-pentanediol, adipic acid and trimethylolpropane.

Moreover, yet another example is PLACCEL 410 manufactured by Daicel Corporation. This product is a polyester polyol with a four-branch structure that is a polymer of a tetrafunctional hydroxyl group-containing compound and ε-caprolactone.

The amount of the polyfunctional polyol (ay), based on the total mass of the urethane prepolymer (A), is preferably within a range from 0.5 to 25% by mass, and more preferably from 5 to 15% by mass. Provided the amount is at least 0.5% by mass, an adequately branched structure is formed, yielding superior cohesive force and improved initial curability. Further, provided the amount is not more than 25% by mass, gelling or aggregation during production of the urethane prepolymer (A) can be suppressed, which is desirable.

### [Polyisocyanate (az)]

Conventionally known compounds may be used as the polyisocyanate (az). Examples include aromatic polyisocyanates, aliphatic polyisocyanates and alicyclic polyisocyanates.

Examples of the aromatic polyisocyanates include 1,3-phenylene diisocyanate, 4,4'-diphenyl diisocyanate, 1,4-phenylene diisocyanate, 4,4'-diphenylmethane diisocyanate, 2,4-tolylene diisocyanate, 2,6-tolylene diisocyanate, 4,4'-toluidine diisocyanate, 2,4,6-triisocyanatotoluene, 1,3,5-triisocyanatobenzene, dianisidine diisocyanate, 4,4'-diphenyl ether diisocyanate, and 4,4',4"-triphenylmethane triisocyanate, ω,ω'-diisocyanato-1,3-dimethylbenzene, ω,ω'-diisocyanato-1,4-dimethylbenzene, ω,ω'-diisocyanato-1,4-diethylbenzene, 1,4-tetramethylxylylene diisocyanate, and 1,3-tetramethylxylylene diisocyanate.

Examples of the aliphatic polyisocyanates include trimethylene diisocyanate, tetramethylene diisocyanate, hexamethylene diisocyanate (HDI), pentamethylene diisocyanate, 1,2-propylene diisocyanate, 2,3-butylene diisocyanate, 1,3-butylene diisocyanate, dodecamethylene diisocyanate, and 2,4,4-trimethylhexamethylene diisocyanate.

Examples of the alicyclic polyisocyanates include isophorone diisocyanate (IPDI), 1,3-cyclopentane diisocyanate, 1,3-cyclohexane diisocyanate, 1,4-cyclohexane diisocyanate, methyl-2,4-cyclohexane diisocyanate, methyl-2,6-cyclohexane diisocyanate, 4,4'-methylenebis(cyclohexyl isocyanate), and 1,4-bis(isocyanatomethyl)cyclohexane.

Other examples of polyisocyanates include trimethylolpropane adducts, biurets, allophanates and trimers (wherein these trimers include an isocyanurate ring) of the above polyisocyanates.

For the polyisocyanate (az), 4,4'-diphenylmethane diisocyanate, hexamethylene diisocyanate (HDI), and isophorone diisocyanate (IPDI) are preferred. When at least one of these compounds is used, a favorable cohesive force can be imparted due to an appropriate level of urethane linkages, and satisfactory adhesive characteristics can be more easily obtained.

In the production of the urethane prepolymer (A), the molar ratio of isocyanate groups (isocyanato groups) in the polyisocyanate (az) relative to the total of all the hydroxyl groups of the polyol (ax) and the polyfunctional polyol (ay) (namely, the value of NCO/OH) is within a range from 0.1 to 0.9, more from 0.3 to 0.85, and more preferably from 0.4 to 0.85. The blend ratio between the raw materials is preferably adjusted so that the above molar ratio (NCO/OH) falls within the above range.

When the value of NCO/OH approaches 1, gelling and aggregation tend to occur more readily during production of the urethane prepolymer (A). Accordingly, by adjusting the value of NCO/OH to not more than 0.9, gelling during the production of the urethane prepolymer (A) can be effectively suppressed. Adjusting the value of NCO/OH to at least 0.1 is preferred in terms of increasing the molecular weight of the obtained urethane prepolymer (A) and achieving satisfactory adhesive characteristics.

In order to obtain superior adhesive strength, the amount of the polyisocyanate (az), based on the total mass of the urethane prepolymer (A), may be 0.3% by mass or greater, and is preferably within a range from 0.5 to 30% by mass, more preferably from 0.6 to 20% by mass, and even more preferably from 1.0 to 20% by mass.

### [Catalyst]

If necessary, one or more catalysts may be used in the production of the polyol (ax) or the urethane prepolymer (A) having a hydroxyl group. Conventional compounds may be used as the catalyst. Examples of catalysts that can be used include tertiary amine-based compounds and organometallic compounds.

Examples of the tertiary amine-based compounds include triethylamine, triethylenediamine, and 1,8-diazabicyclo(5,4,0)-undecene-7 (DBU).

Examples of the organometallic compounds include tin-based compounds and non-tin-based compounds.

Examples of the tin-based compounds include dibutyltin dichloride, dibutyltin oxide, dibutyltin dibromide, dibutyltin dimaleate, dibutyltin dilaurate (DBTDL), dibutyltin diacetate, dibutyltin sulfide, dioctyltin dilaurate, tributyltin sulfide, tributyltin oxide, tributyltin acetate, triethyltin ethoxide, tributyltin ethoxide, dioctyltin oxide, tributyltin chloride, tributyltin trichloroacetate, tin 2-ethyloctylate, and tin 2-ethylhexanoate.

Examples of the non-tin-based compounds include titanium-based compounds such as dibutyltitanium dichloride, tetrabutyl titanate and butoxytitanium trichloride; lead-based compounds such as lead oleate, lead 2-ethylhexanoate, lead benzoate and lead naphthenate, iron-based compounds such as iron 2-ethylhexanoate and iron acetylacetonate; cobalt-based compounds such as cobalt benzoate and cobalt 2-ethylhexanoate; zinc-based compounds such as zinc naphthenate and zinc 2-ethylhexanoate; and zirconium-based compounds such as zirconium naphthenate.

The type of catalyst and the amount added may be adjusted appropriately to ensure favorable progression of the reaction.

The amount used of the catalyst, relative to 100 parts by mass of the total of all the constituent components of the polyol (ax) or the urethane prepolymer (A), is preferably within a range from 0.0001 to 1.0 parts by mass. This amount used is more preferably within a range from 0.001 to 0.5 parts by mass, even more preferably from 0.005 to 0.1 parts by mass, and still more preferably from 0.01 to 0.1 parts by mass.

In those cases where a catalyst is used during the production of the polyol (ax) and the urethane prepolymer (A), the catalyst may be inactivated. Particularly in the production of the urethane prepolymer (A) having a hydroxyl group, the use of an inactivated catalyst is preferred. Acetylacetone or a phosphoric acid compound may be added as a reaction terminator. A single reaction terminator may be used alone, or a combination of two or more such compounds may be used.

### [Solvent]

In the production of the polyol (ax) and the urethane prepolymer (A), one or more solvents may be used if necessary. Examples of solvents that can be used include ketone-based solvents such as acetone and methyl ethyl ketone, ester-based solvents such as ethyl acetate, hydrocarbon-based solvents such as toluene and xylene, and ether-based solvents such as diphenyl ether. Particularly in the production of the urethane prepolymer (A), among the above solvents, ester-based solvents and hydrocarbon-based solvents are preferred in terms of solubility and the boiling point of the solvent. In one embodiment, the adhesive agent composition may contain a solvent that has been used in the production of the polyol (ax) or the urethane prepolymer (A).

### [Method for Producing Urethane Prepolymer (A)]

There are no particular limitations on the method used for producing the urethane prepolymer (A). The urethane prepolymer (A) can be produced, for example, by a conventional polymerization method such as a bulk polymerization method or a solution polymerization method. Examples of procedures for the production method are described below.

(Procedure 1) A procedure in which at least one polyisocyanate (az), at least one polyol (ax) and at least one polyfunctional polyol (ay), and if necessary one or more catalysts and one or more solvents are used, and these components are all added to a flask in a single batch.

(Procedure 2) A procedure in which at least one polyol (ax) and at least one polyfunctional polyol (ay), and if necessary one or more catalysts and one or more solvents are added to a flask, and at least one polyisocyanate (az) is then added dropwise to the flask.

Among these procedures, the above (Procedure 2) is preferred. In the (Procedure 2), any localized reduction in the reactivity between the polyol (ax), the polyfunctional polyol (ay) and the polyisocyanate (az) can be suppressed, and reaction of any components of excessively high molecular weight can also be suppressed, enabling a broadening of the molecular weight dispersity.

In those cases where a catalyst is used, the reaction temperature is preferably less than 100°C, and is more preferably within a range from 85 to 95°C. When the reaction temperature is adjusted to a temperature of less than 100°C, side reactions other than the urethanization reaction can be suppressed, meaning the desired polymer can be obtained more easily. In those cases where a catalyst is not used, the reaction temperature is preferably at least 100°C, and more preferably 110°C or higher.

### <Curing Agent>

The adhesive agent composition that represents one embodiment of the present invention may also contain a curing agent. Use of a curing agent is preferred in terms of improving the curability of the polymer.

Examples of substances that may be used as the curing agent include isocyanate curing agents (B), epoxy curing agents, melamine curing agents, carbodiimide curing agents, oxazoline curing agents, and aziridine curing agents.

In one embodiment, the adhesive agent composition preferably contains an isocyanate curing agent (B). Use of the isocyanate curing agent (B) is preferred in terms of enabling a further improvement in the initial curability, and particularly in terms of enabling a satisfactory holding force to be achieved with ease.

### [Isocyanate Curing Agent (B)]

Conventional compounds may be used as the isocyanate curing agent (B). For example, the compounds listed above as examples of the polyisocyanate (az) used as a raw material in the production of the urethane prepolymer (A) having a hydroxyl group may be used. Specific examples of compounds that may be used include aromatic polyisocyanates, aliphatic polyisocyanates, aromatic aliphatic polyisocyanates, alicyclic polyisocyanates, and trimethylolpropane adducts, biurets and trimers of these polyisocyanates.

In one embodiment, the adhesive agent composition may also contain the isocyanate curing agent (B) if necessary. The amount of the isocyanate curing agent (B), per 100 parts by mass of the urethane prepolymer (A), is preferably not more than 25 parts by mass, more preferably within a range from 1.0 to 15 parts by mass, and even more preferably from 1.5 to 15 parts by mass. When the amount of the isocyanate curing agent (B) is adjusted to a value within the above range, even more superior initial curability can be achieved with ease.

### <Tackifier Resin>

In one embodiment, the adhesive agent composition may also contain a tackifier resin. Use of a tackifier resin is preferred in terms of further improving the adhesive characteristics.

Examples of resins that may be used as the tackifier resin include rosin-based resins, polyterpene resins, aliphatic hydrocarbon resins, aliphatic petroleum resins, aromatic petroleum resins, and alkylphenol formaldehyde resins (oil-based phenol resins).

Further, the tackifier resin is preferably a resin obtained from a biomass-derived raw material. From this type of viewpoint, the tackifier resin is preferably a rosin-based resin or a polyterpene resin.

The amount of the tackifier resin, per 100 parts by mass of the urethane prepolymer (A), is preferably within a range from 2 to 50 parts by mass, and more preferably from 5 to 40 parts by mass.

When this amount is adjusted to at least 2 parts by mass, the effects of adding the tackifier resin mean that the desired adhesive characteristics can be obtained with ease. Further, adjusting this amount to a value of not more than 50 parts by mass is preferred in terms of achieving favorable compatibility with the polymer components such as the urethane prepolymer (A). Accordingly, problems such as turbidity or whitening of the coating liquid external appearance or the coating film external appearance can be suppressed.

### <Other Components>

In one embodiment, the adhesive agent composition may also contain typical additives other than the components described above, provided these additives do not impair the characteristics of the composition as an adhesive agent or the biodegradability. Examples of additives that may be used include ultraviolet absorbers, light stabilizers, leveling agents, antistatic agents, releasability modifiers, fillers, colorants, antioxidants, plasticizers, and surfactants.

### <2> Adhesive Sheet

Another embodiment of the present invention relates to an adhesive sheet. The adhesive sheet has an adhesive layer formed from the adhesive agent composition of one of the embodiments described above on at least one surface of a substrate. In other words, the adhesive sheet has a substrate, and an adhesive layer provided on at least one surface of the substrate, wherein the adhesive layer is a cured product of an adhesive agent composition of an embodiment described above. In one embodiment, a release sheet for preventing the adhesion of foreign matter may be provided on the other surface of the adhesive layer that is not in contact with the substrate. Typically, the adhesive layer is protected with a release sheet until immediately prior to use.

The substrate may be any flexible sheet or sheet-like material, and there are no particular limitations. Examples of the substrate include plastics, papers, metal foils, and laminates composed of one or more of these materials.

The surface of the substrate that contacts the adhesive layer may be subjected to a simple adhesive treatment to improve the adhesiveness. For example, a dry treatment such as a corona discharge treatment or a wet treatment such as an anchor coating agent application may be used.

In one embodiment, examples of plastic materials that may constitute the substrate include ester-based resins such as polyethylene terephthalate (PET) and polyethylene naphthalate (PEN); olefin-based resins such as polyethylene (PE), polypropylene (PP) and cycloolefin polymer (COP); vinyl-based resins such as polyvinyl chloride; amide-based resins such as Nylon 66; and urethane-based resins (including foamed resins).

The thickness of the substrate is typically within a range from 10 to 300 µm. In those cases where a polyurethane sheet (including foamed resins) is used as the substrate, the thickness of the substrate (sheet) is typically within a range from 20 to 50,000 µm. Papers can also be used as the substrate. Examples include plain papers, coated papers and art papers. Furthermore, metal foils can also be used as the substrate. Examples of these metal foils include aluminum foil and copper foil.

The release sheet may be a release sheet having a conventional configuration. For example, a release sheet prepared by subjecting the surface of a sheet-like material such as a plastic or a paper to a conventional release treatment with a silicone-based release agent may be used.

One example of the method used for producing the adhesive sheet includes coating the adhesive agent composition of an embodiment described above onto the surface of the substrate to form a coating layer, and subsequently drying and curing the coating layer to form the adhesive layer. The heating and drying temperature is typically within a range from 60 to 150°C. The thickness of the adhesive layer is typically within a range from 0.1 to 200 µm.

A conventional method may be used as the coating method, and examples include roll coating methods, comma coating methods, die coating methods, reverse coating methods, silk screen methods and gravure coating methods.

An example of a different method from the method described above includes coating the adhesive agent composition of an embodiment described above onto the surface of a release sheet to form a coating layer, subsequently drying and curing the coating layer to form an adhesive layer, and then finally bonding a substrate to the exposed surface of the adhesive layer. In this method, if another release sheet is bonded to the adhesive layer instead of the substrate, then a cast adhesive sheet having a configuration represented by release sheet / adhesive layer / release sheet can be obtained.

### EXAMPLES

Embodiments of the present invention are described below using a series of examples. Needless to say, the embodiments of the present invention are not limited to the examples presented below. In the following description, "parts" means "parts by mass" and "%" means "% by mass".

Further, the blend amounts listed for the raw materials (excluding solvents) in the following examples and tables represent non-volatile fraction equivalent values.

Moreover, Mw, Mn and Tg values mentioned below represent values measured using the methods described below.

### [Measurement of Weight Average Molecular Weight (Mw) and Number Average Molecular Weight (Mn)]

The weight average molecular weight (Mw) and the number average molecular weight (Mn) were measured by a gel permeation chromatography (GPC) method. The measurement conditions were as follows. The Mw and Mn values both represent polystyrene equivalent values.

### (Measurement Conditions)

Apparatus: SHIMADZU Prominence (manufactured by Shimadzu Corporation)
Columns: three SHODEX LF-804 columns (manufactured by Showa Denko K.K.) connected in series
Detector: differential refractive index detector
Solvent: tetrahydrofuran (THF)
Flow rate: 0.5 mL/minute
Solvent temperature: 40°C
Sample concentration: 0.1%
Sample injection volume: 100 µL

### [Glass Transition Temperature (Tg)]

An SSC5200 Disk Station (manufactured by Seiko Instruments Inc.) was connected to a robot DSC (differential scanning calorimeter, an RDC220 manufactured by Seiko Instruments Inc.) and used for conducting measurements. A sample of about 10 mg was placed in an aluminum pan, weighed accurately and set in the differential scanning calorimeter, and using the same type of aluminum pan containing no sample as a reference, the pans were held at a temperature of 100°C for 5 minutes, and then cooled rapidly to -120°C using liquid nitrogen. Subsequently, the temperature was raised at a rate of temperature increase of 10°C/minute, and the glass transition temperature (Tg, units: °C) was determined from the resulting DSC chart.

### <1> Raw Materials

The raw materials shown in the tables were as follows.

### <Polyol (ax)>

### [Monomer (ax'1)]

L-lactic acid (degree of biomass: 100%, degree of biodegradability: 100%)
D-lactic acid (degree of biomass: 100%, degree of biodegradability: 100%)
L-lactide (degree of biomass: 100%, degree of biodegradability: 100%)
D-lactide (degree of biomass: 100%, degree of biodegradability: 100%)
DL-lactide (degree of biomass: 100%, degree of biodegradability: 100%)
meso-lactide (degree of biomass: 100%, degree of biodegradability: 100%)

### [Monomer (ax'2)]

6-hydroxycaproic acid (degree of biomass: 0%, degree of biodegradability: 100%)
ε-caprolactone (degree of biomass: 0%, degree of biodegradability: 100%)

### [Monomer (ax'3)]

PD: 1,3-propanediol, Mn: 76, number of hydroxyl groups: 2 (degree of biomass: 100%, degree of biodegradability: 100%)
PPG600: SANNIX PP-600, a polyoxypropylene glycol, Mn: 600, number of hydroxyl groups: 2, manufactured by Sanyo Chemical Industries, Ltd. (degree of biomass: 0%, degree of biodegradability: 0%)
P-1010: KURARAY POLYOL P-1010, 3-methyl-1,5-pentanediol / adipic acid, a polyester polyol, Mn: 1,000, manufactured by Kuraray Co., Ltd. (degree of biomass: 0%, degree of biodegradability: 0%)
P-2010: KURARAY POLYOL P-2010, 3-methyl-1,5-pentanediol / adipic acid, polyester polyol, Mn: 2,000, manufactured by Kuraray Co., Ltd. (degree of biomass: 0%, degree of biodegradability: 0%)
HF-1300: URIC HF-1300, castor oil polyol, Mn: 1,400, number of hydroxyl groups: 2, manufactured by Itoh Oil Chemicals Co., Ltd. (degree of biomass: 100%, degree of biodegradability: 0%)
Polyols ax'3-1 to ax'3-3: as described below

### <Polyfunctional Polyol (ay)>

F-1010: KURARAY POLYOL F-1010, 3-methyl-1,5-pentanediol / adipic acid / trimethylolpropane polyester polyol, Mn: 1,000, number of hydroxyl groups: 3, manufactured by Kuraray Co., Ltd. (degree of biomass: 0%, degree of biodegradability: 0%)
GL-600: SANNIX PP-600, glycerol/PO/EO, a polyoxypropylene glycol, Mn: 600, number of hydroxyl groups: 3, manufactured by Sanyo Chemical Industries, Ltd. (degree of biomass: 0%, degree of biodegradability: 0%)
GI3000: NISSO-PBGI-3000, a polybutadiene polyol, Mn: 3,100, number of hydroxyl groups: 2, manufactured by Nippon Soda Co., Ltd. (degree of biomass: 0%, degree of biodegradability: 0%)
PLACCEL 410: a polycaprolactone polyol, Mn: 1,010, number of hydroxyl groups: 4, manufactured by Daicel Corporation (degree of biomass: 0%, degree of biodegradability: 100%)

### <Polyisocyanate (az)>

IPDI: isophorone diisocyanate
HDI: hexamethylene diisocyanate
XDI: m-xylylene diisocyanate

### <Curing Agents>

### [Isocyanate Curing Agent (B)]

HDI-TMP: hexamethylene diisocyanate trimethylolpropane adduct, TAKENATE D-160N, manufactured by Mitsui Chemicals Inc.

XDI-TMP: m-xylylene diisocyanate trimethylolpropane adduct, TAKENATE D-110N, manufactured by Mitsui Chemicals Inc.

TDI-Nu: isocyanurate of tolylene diisocyanate, TAKENATE D-204, manufactured by Mitsui Chemicals Inc.

### [Carbodiimide Curing Agent]

V-09B: a carbodiimide, CARBODILITE V-09B, manufactured by Nisshinbo Chemical Inc.

### <Tackifier Resins>

A-75: SUPER ESTER A-75, a rosin-based resin, manufactured by Arakawa Chemical Industries, Ltd. (degree of biomass: 92%, degree of biodegradability: 0%)
D-125: PENSEL D-125, a rosin-based resin, manufactured by Arakawa Chemical Industries, Ltd. (degree of biomass: 85%, degree of biodegradability: 0%)

In the above raw materials, the degree of biomass refers to the mass percentage (% by mass) of biomass-derived raw materials used during production, or the amount determined based on ASTM D6866.

The biodegradability for the above raw materials was determined in accordance with ISO 17556, ISO 14851, ISO 14852, ISO 15985, ISO 13975, ISO 14853, ISO 14855-1, ISO 14855-2, ISO 18830, ISO 19679, ASTM D7081 and ASTM D669 1 as well as JIS standards corresponding with these ISO standards. In those cases where biodegradability was confirmed, the degree of biodegradability for the raw material was deemed to be 100%.

### <2> Polyol (ax'3) Production Examples

### (Polyol (ax'3-1))

Sebacic acid and 1,3-propanediol, which were both formed from biomass-derived raw materials and were biodegradable raw materials, were polymerized to obtain a polyester polyol (ax'3-1) with a number average molecular weight of 1,000. The degree of biomass for the polyol (ax'3-1) was 100%, and the degree of biodegradability was 100%.

### (Polyol (ax'3-2))

Succinic acid and 1,3-propanediol, which were both formed from biomass-derived raw materials and were biodegradable raw materials, were polymerized to obtain a polyester polyol (ax'3-2) with a number average molecular weight of 800. The degree of biomass for the polyol (ax'3-2) was 100%, and the degree of biodegradability was 100%.

### (Polyol (ax'3-3))

Succinic acid and 1,3-propanediol, which were both formed from biomass-derived raw materials and were biodegradable raw materials, were polymerized to obtain a polyester polyol (ax'3-3) with a number average molecular weight of 200. The degree of biomass for the polyol (ax'3-3) was 100%, and the degree of biodegradability was 100%.

### <3> Polyol (ax) Production Examples

### (Polyol (ax-1))

A reaction flask fitted with a Dean-Stark trap was charged with 100 parts of L-lactic acid, 35 parts of 6-hydroxycaproic acid, and 0.6 parts of tin powder. These components were stirred under heating at 150°C/50 mmHg for three hours to distill off the water, and the mixture was then stirred under heating at 150°C/30 mmHg for a further two hours. Subsequently, 210 parts of diphenyl ether was added to the reaction solution, an azeotropic dehydration reaction was conducted at 150°C/35 mmHg, the distilled water and solvent were separated using a water separator, and only the solvent was returned to the reaction flask. After two hours, the reaction solution was passed through a column filled with the molecular sieve 3A and returned to the reaction flask, and a reaction was then conducted at 130°C/17 mmHg for 10 hours. Subsequently, 6.0 parts of propanediol (PD) was added to the reaction solution, a reaction was conducted at 130°C/17 mmHg for 10 hours, and the reaction was then halted.

The reaction solution obtained in the manner described above was diluted by adding 440 parts of anhydrous diphenyl ether, the solution was then cooled to 40°C, and the precipitated crystals were collected by filtration. Next, 120 parts of 0.5 N-HCl and 120 parts of ethanol were added to the crystals, and after stirring at 35°C for one hour, the crystals were collected by filtration. The thus obtained solid product was dried at 60°C/50 mmHg to obtain a polyol (ax-1). The number average molecular weight (Mn) of this polyol (ax-1) was 1,700.

### (Polyols (ax-2, ax-3))

The blend amounts (parts by mass) were altered as shown in Table 1, and the same procedure as that described for the production of the polyol (ax-1) was used to obtain polyols (ax-2, ax-3).

The number average molecular weight (Mn) for each of the obtained polyols is shown in Table 1.

### (Polyol (ax-4))

A reaction flask fitted with a stirrer, a thermometer and an outflow cooler was charged, as outlined in Table 1, with 100 parts of L-lactide, 400 parts of ε-caprolactone, 500 parts of P-1010, and 0.1 parts of tin 2-ethyloctylate as a catalyst. These materials were heated to 170°C over a five-hour period under a nitrogen atmosphere at normal pressure, and a polymerization reaction was then conducted by reacting the materials for three hours while the distilled water was removed from the system.

Subsequently, the pressure was reduced to 10 mmHg and the residual unreacted monomers were removed over three hours, thus obtaining a polyol (ax-4). The number average molecular weight (Mn) of this polyol (ax-4) was 2,000.

### (Polyols (ax-5 to ax-55, and axc-1 to axc-4))

With the exception of altering the blend amounts (parts by mass) as shown in Table 1, the same procedure as that described for the production of the polyol (ax-4) was used to obtain polyols (ax-5 to ax-55, and axc-1 to axc-3). The number average molecular weight (Mn) for each of the obtained polyols is shown in Table 1.

In Table 1, the amount of each of the monomers is shown as a percentage (% by mass) based on the total mass (100% by mass) of the monomer mixture used in forming the polyol (ax). Further, monomer (ax'1) / monomer (ax'2) means the ratio between the amount of the monomer (ax'1) and the amount of the monomer (ax'2).

**[Table 1-1]**

| Polyol (ax) | | | ax-1 | ax-2 | ax-3 | ax-4 | ax-5 | ax-6 | ax-7 | ax-8 | ax-9 | ax-10 | ax-11 | ax-12 |
|---|---|---|---|---|---|---|---|---|---|---|---|---|---|---|
| Monomer (ax'1) | Lactic acid (ax'1-1) | L-lactic acid | 100 | 100 | 70 | | | | | | | | | |
| | | D-lactic acid | | | 30 | | | | | | | | | |
| | Lactide (ax'1-2) | L-lactide | | | | 100 | 100 | 100 | 100 | 100 | 100 | 100 | 100 | 100 |
| | | D-lactide | | | | | | | | | | | | |
| | | DL-lactide | | | | | | | | | | | | |
| | | meso-lactide | | | | | | | | | | | | |
| Monomer (ax'2) | Aliphatic hydroxycarboxylic acid (ax'2- 1) | 6-hydroxycaproic acid | 35 | 500 | 150 | | | | | | | | | |
| | Lactone (ax'2-2) | ε-caprolactone | | | | 400.0 | 400.0 | 400.0 | 25.0 | 25.0 | 25.0 | 100.0 | 100.0 | 100.0 |
| Monomer (ax'3) | Aliphatic glycol | PD | 6.0 | 41.5 | 13.6 | | | | | | | | | |
| | | PPG600 | | | | | | | | | | | | |
| | Polyester polyol | Polyol (a3-1) | | | | | | | | | | | | |
| | | Polyol (a3-2) | | | | | | | | | | | | |
| | | Polyol (a3-3) | | | | | | | | | | | | |
| | | P-1010 | | | | 500.0 | 125.0 | 62.5 | 125.0 | 31.3 | 15.6 | | 50.0 | |
| | | P-2010 | | | | | | | | | | 133.3 | | |
| | Castor oil polyol | HF-1300 | | | | | | | | | | | | 77.8 |
| Number average molecular weight (Mn) | | | 1,700 | 1,100 | 1,400 | 2,000 | 5,000 | 9,000 | 2,000 | 5,000 | 9,000 | 5,000 | 5,000 | 5,000 |
| Proportion within monomer mixture that constitutes polyol (ax) | | Monomer (ax'1) content [%] | 70.9% | 15.6% | 37.9% | 10.0% | 16.0% | 17.8% | 40.0% | 64.0% | 71.1% | 30.0% | 40.0% | 36.0% |
| | | Monomer (ax'2) content [%] | 24.8% | 77.9% | 56.9% | 40.0% | 64.0% | 71.1% | 10.0% | 16.0% | 17.8% | 30.0% | 40.0% | 36.0% |
| | | Monomer (ax'3) content [%] | 4.3% | 6.5% | 5.2% | 50.0% | 20.0% | 11.1% | 50.0% | 20.0% | 11.1% | 40.0% | 20.0% | 28.0% |
| | | Monomer (ax'1) + Monomer (ax'2) content [%] | 95.7% | 93.5% | 94.8% | 50.0% | 80.0% | 88.9% | 50.0% | 80.0% | 88.9% | 60.0% | 80.0% | 72.0% |
| | | Monomer (ax'1) / Monomer (ax'2) (mass ratio) | 74/26 | 17/83 | 40/60 | 20/80 | 20/80 | 20/80 | 80/20 | 80/20 | 80/20 | 50/50 | 50/50 | 50/50 |

**[Table 1-2]**

| Polyol (ax) | | | ax-13 | ax-14 | ax-15 | ax-16 | ax-17 | ax-18 | ax-19 | ax-20 | ax-21 | ax-22 | ax-23 | ax-24 |
|---|---|---|---|---|---|---|---|---|---|---|---|---|---|---|
| Monomer (ax'1) | Lactic acid (ax'1-1) | L-lactic acid | | | | | | | | | | | | |
| | | D-lactic acid | | | | | | | | | | | | |
| | Lactide (ax'1-2) | L-lactide | 100 | 100 | 100 | 100 | 80 | 80 | 50 | 50 | | | | |
| | | D-lactide | | | | | 20 | 20 | 50 | 50 | | | | |
| | | DL-lactide | | | | | | | | | 100 | 100 | | |
| | | meso-lactide | | | | | | | | | | | 100 | 100 |
| Monomer (ax'2) | Aliphatic hydroxycarboxylic acid (ax'2- 1) | 6-hydroxycaproic acid | | | | | | | | | | | | |
| | Lactone (ax'2-2) | ε-caprolactone | 100 | 100 | 233.3 | 42.9 | 233.3 | 42.9 | 233.3 | 42.9 | 233.3 | 42.9 | 233.3 | 42.9 |
| Monomer (ax'3) | Aliphatic glycol | PD | | | | | | | | | | | | |
| | | PPG600 | | 27.3 | | | | | | | | | | |
| | Polyester polyol | Polyol (a3-1) | 50 | | 222.2 | 22.0 | 51.3 | 95.2 | 51.3 | 95.2 | 51.3 | 95.2 | 51.3 | 95.2 |
| | | Polyol (a3-2) | | | | | | | | | | | | |
| | | Polyol (a3-3) | | | | | | | | | | | | |
| | | P-1010 | | | | | | | | | | | | |
| | | P-2010 | | | | | | | | | | | | |
| | Castor oil polyol | HF-1300 | | | | | | | | | | | | |
| Number average molecular weight (Mn) | | | 5,000 | 5,000 | 2,500 | 7,500 | 7,500 | 2,500 | 7,500 | 2,500 | 7,500 | 2,500 | 7,500 | 2,500 |
| Proportion within monomer mixture that constitutes polyol (ax) | | Monomer (ax'1) content [%] | 40.0% | 44.0% | 18.0% | 60.7% | 26.0% | 42.0% | 26.0% | 42.0% | 26.0% | 42.0% | 26.0% | 42.0% |
| | | Monomer (ax'2) content [%] | 40.0% | 44.0% | 42.0% | 26.0% | 60.7% | 18.0% | 60.7% | 18.0% | 60.7% | 18.0% | 60.7% | 18.0% |
| | | Monomer (ax'3) content [%] | 20.0% | 12.0% | 40.0% | 13.3% | 13.3% | 40.0% | 13.3% | 40.0% | 13.3% | 40.0% | 13.3% | 40.0% |
| | | Monomer (ax'1) + Monomer (ax'2) content [%] | 80.0% | 88.0% | 60.0% | 86.7% | 86.7% | 60.0% | 86.7% | 60.0% | 86.7% | 60.0% | 86.7% | 60.0% |
| | | Monomer (ax'1) / Monomer (ax'2) (mass ratio) | 50/50 | 50/50 | 30/70 | 70/30 | 30/70 | 70/30 | 30/70 | 70/30 | 30/70 | 70/30 | 30/70 | 70/30 |

**[Table 1-3]**

| Polyol (ax) | | | ax-25 | ax-26 | ax-27 | ax-28 | ax-29 | ax-30 | ax-31 | ax-32 | ax-33 | ax-34 | ax-35 | ax-36 |
|---|---|---|---|---|---|---|---|---|---|---|---|---|---|---|
| Monomer (ax'1) | Lactic acid (ax'1-1) | L-lactic acid | | | | | | | | | | | | |
| | | D-lactic acid | | | | | | | | | | | | |
| | Lactide (ax'1-2) | L-lactide | | | | | | | | | | | | |
| | | D-lactide | | | | | | | | | | | | |
| | | DL-lactide | | | | | | | | | | | | |
| | | meso-lactide | 100 | 100 | 100 | 100 | 100 | 100 | 100 | 100 | 100 | 100 | 100 | 100 |
| Monomer (ax'2) | Aliphatic hydroxycarboxylic acid (ax'2- 1) | 6-hydroxycaproic acid | | | | | | | | | | | | |
| | Lactone (ax'2-2) | ε-caprolactone | 100 | 100 | 100 | 42.9 | 100.0 | 400.0 | 42.9 | 100.0 | 400.0 | 42.9 | 100.0 | 400.0 |
| Monomer (ax'3) | Aliphatic glycol | PD | | | | | | | | | | | | |
| | | PPG600 | | | | | | | | | | | | |
| | Polyester polyol | Polyol (a3-1) | 20 | | | | | | | | | | | |
| | | Polyol (a3-2) | | 14.3 | | | | | | | | | | |
| | | Polyol (a3-3) | | | 3.9 | 2.8 | 3.7 | 8.8 | 1.4 | 1.9 | 4.6 | 1.0 | 1.3 | 3.0 |
| | | P-1010 | | | | | | | | | | | | |
| | | P-2010 | | | | | | | | | | | | |
| | Castor oil polyol | HF-1300 | | | | | | | | | | | | |
| Number average molecular weight (Mn) | | | 11,000 | 12,000 | 10,500 | 10,500 | 11,000 | 11,500 | 20,000 | 21,000 | 22,000 | 30,000 | 32,000 | 34,000 |
| Proportion within monomer mixture that constitutes polyol (ax) | | Monomer (ax'1) content [%] | 45.5% | 46.7% | 49.0% | 68.7% | 49.1% | 19.7% | 69.3% | 49.5% | 19.8% | 69.5% | 49.7% | 19.9% |
| | | Monomer (ax'2) content [%] | 45.5% | 46.7% | 49.0% | 29.4% | 49.1% | 78.6% | 29.7% | 49.5% | 79.3% | 29.8% | 49.7% | 79.5% |
| | | Monomer (ax'3) content [%] | 9.1% | 6.7% | 1.9% | 1.9% | 1.8% | 1.7% | 1.0% | 1.0% | 0.9% | 0.7% | 0.6% | 0.6% |
| | | Monomer (ax'1) + Monomer (ax'2) content [%] | 90.9% | 93.3% | 98.1% | 98.1% | 98.2% | 98.3% | 99.0% | 99.0% | 99.1% | 99.3% | 99.4% | 99.4% |
| | | Monomer (ax'1) / Monomer (ax'2) (mass ratio) | 50/50 | 50/50 | 50/50 | 70/30 | 50/50 | 20/80 | 70/30 | 50/50 | 20/80 | 70/30 | 50/50 | 20/80 |

**[Table 1-4]**

| Polyol (ax) | | | ax-37 | ax-38 | ax-39 | ax-40 | ax-41 | ax-42 | ax-43 | ax-44 | ax-45 | ax-46 | ax-47 | ax-48 |
|---|---|---|---|---|---|---|---|---|---|---|---|---|---|---|
| Monomer (ax'1) | Lactic acid (ax'1-1) | L-lactic acid | | | | | | | | | | | | |
| | | D-lactic acid | | | | | | | | | | | | |
| | Lactide (ax'1-2) | L-lactide | 40 | | | 100 | 100 | 100 | 100 | | | | | |
| | | D-lactide | | 40 | | | | | | 100 | 100 | 100 | 100 | |
| | | DL-lactide | | | 40 | | | | | | | | | 100 |
| | | meso-lactide | 60 | 60 | 60 | | | | | | | | | |
| Monomer (ax'2) | Aliphatic hydroxycarboxylic acid (ax'2- 1) | 6-hydroxycaproic acid | | | | | | | | | | | | |
| | Lactone (ax'2-2) | ε-caprolactone | 100 | 100 | 100.0 | 400.0 | 42.9 | 400.0 | 42.9 | 400.0 | 42.9 | 400.0 | 42.9 | 400.0 |
| Monomer (ax'3) | Aliphatic glycol | PD | | | | | | | | | | | | |
| | | PPG600 | | | | | | | | | | | | |
| | Polyester polyol | Polyol (a3-1) | | | | | | | | | | | | |
| | | Polyol (a3-2) | | | | | | | | | | | | |
| | | Polyol (a3-3) | 2.0 | 2.0 | 2.0 | 9.3 | 2.6 | 3.0 | 0.8 | 9.3 | 2.6 | 3.0 | 0.8 | 9.3 |
| | | P-1010 | | | | | | | | | | | | |
| | | P-2010 | | | | | | | | | | | | |
| | Castor oil polyol | HF-1300 | | | | | | | | | | | | |
| Number average molecular weight (Mn) | | | 20,000 | 20,000 | 20,000 | 11,000 | 11,000 | 34,000 | 34,000 | 11,000 | 11,000 | 34,000 | 34,000 | 11,000 |
| Proportion within monomer mixture that constitutes polyol (ax) | | Monomer (ax'1) content [%] | 49.5% | 49.5% | 49.5% | 19.6% | 68.7% | 19.9% | 69.6% | 19.6% | 68.7% | 19.9% | 69.6% | 19.6% |
| | | Monomer (ax'2) content [%] | 49.5% | 49.5% | 49.5% | 78.5% | 29.5% | 79.5% | 29.8% | 78.5% | 29.5% | 79.5% | 29.8% | 78.5% |
| | | Monomer (ax'3) content [%] | 1.0% | 1.0% | 1.0% | 1.8% | 1.8% | 0.6% | 0.6% | 1.8% | 1.8% | 0.6% | 0.6% | 1.8% |
| | | Monomer (ax'1) + Monomer (ax'2) content [%] | 99.0% | 99.0% | 99.0% | 98.2% | 98.2% | 99.4% | 99.4% | 98.2% | 98.2% | 99.4% | 99.4% | 98.2% |
| | | Monomer (ax'1) / Monomer (ax'2) (mass ratio) | 50/50 | 50/50 | 50/50 | 20/80 | 70/30 | 20/80 | 70/30 | 20/80 | 70/30 | 20/80 | 70/30 | 20/80 |

**[Table 1-5]**

| Polyol (ax) | | | ax-49 | ax-50 | ax-52 | ax-52 | ax-53 | ax-54 | ax-55 | axc-1 | axc-2 | axc-3 |
|---|---|---|---|---|---|---|---|---|---|---|---|---|
| Monomer (ax'1) | Lactic acid (ax'1-1) | L-lactic acid | | | | | | | | | | |
| | | D-lactic acid | | | | | | | | | | |
| | Lactide (ax'1-2) | L-lactide | | | | 50 | 50 | 50 | 50 | 100 | | 100 |
| | | D-lactide | | | | 50 | 50 | 50 | 50 | | | |
| | | DL-lactide | 100 | 100 | 100 | | | | | | | |
| | | meso-lactide | | | | | | | | | | |
| Monomer (ax'2) | Aliphatic hydroxycarboxylic acid (ax'2- 1) | 6-hydroxycaproic acid | | | | | | | | | | |
| | Lactone (ax'2-2) | ε-caprolactone | 42.9 | 400 | 42.9 | 400.0 | 42.9 | 400.0 | 42.9 | | 100.0 | 100.0 |
| Monomer (ax'3) | Aliphatic glycol | PD | | | | | | | | 1.5 | 1.5 | 0.3 |
| | | PPG600 | | | | | | | | | | |
| | Polyester polyol | Polyol (a3-1) | | | | | | | | | | |
| | | Polyol (a3-2) | | | | | | | | | | |
| | | Polyol (a3-3) | 2.6 | 3.0 | 0.8 | 9.3 | 2.6 | 3.0 | 0.8 | | | |
| | | P-1010 | | | | | | | | | | |
| | | P-2010 | | | | | | | | | | |
| | Castor oil polyol | HF-1300 | | | | | | | | | | |
| Number average molecular weight (Mn) | | | 11,000 | 34,000 | 34,000 | 11,000 | 11,000 | 34,000 | 34,000 | 5,000 | 5,000 | 50,000 |
| Proportion within monomer mixture that constitutes polyol (ax) | | Monomer (ax'1) content [%] | 68.7% | 19.9% | 69.6% | 19.6% | 68.7% | 19.9% | 69.6% | 98.5% | 0.0% | 49.9% |
| | | Monomer (ax'2) content [%] | 29.5% | 79.5% | 29.8% | 78.5% | 29.5% | 79.5% | 29.8% | 0.0% | 98.5% | 49.9% |
| | | Monomer (ax'3) content [%] | 1.8% | 0.6% | 0.6% | 1.8% | 1.8% | 0.6% | 0.6% | 1.5% | 1.5% | 0.2% |
| | | Monomer (ax'1) + Monomer (ax'2) content [%] | 98.2% | 99.4% | 99.4% | 98.2% | 98.2% | 99.4% | 99.4% | 98.5% | 98.5% | 99.8% |
| | | Monomer (ax'1) / Monomer (ax'2) (mass ratio) | 70/30 | 20/80 | 70/30 | 20/80 | 70/30 | 20/80 | 70/30 | 100/0 | 0/100 | 50/50 |

### <4> Production Examples for Urethane Prepolymer (A) having a Hydroxyl Group (Urethane Prepolymer (A-1))

A four-neck flask fitted with a stirrer, a reflux condenser, a nitrogen inlet tube, a thermometer and a dropping funnel was charged with 100 parts of the polyol (ax-1), 12.1 parts of F-1010, 8.7 parts of HDI, 0.04 parts of dioctyltin dilaurate as a catalyst, and an amount of toluene sufficient to achieve a non-volatile fraction of 60%. These materials were heated gradually to 100°C, and a reaction was conducted for 5 hours. After confirmation that the NCO characteristic absorption (2,270 cm⁻¹) in the IR chart had disappeared, the temperature was cooled to 25°C, and 0.08 parts of acetylacetone was added to halt the reaction.

The urethane prepolymer (A-1) obtained in this manner had a weight average molecular weight (Mw) of 50,000 and a glass transition temperature (Tg) of -10°C.

### (Urethane Prepolymers (A-2 to A-59, and AC-1 to AC-3)

With the exceptions of changing the materials and the blend amounts (parts by mass) used for the urethane prepolymer (A-1) as shown in Table 2, the same procedure as that described above for the production of the urethane prepolymer (A-1) was used to adjust amount of toluene to achieve a non-volatile fraction of 60%, thus obtaining urethane prepolymers (A-2 to A-56, and AC-1 to AC-3). The weight average molecular weight (Mw) and the glass transition temperature (Tg) for each of the obtained urethane prepolymers are shown in Table 2.

In Table 2, the value for NCO/OH represents the molar ratio (NCO/OH) between the isocyanate groups (NCO) of the polyfunctional polyol (ay) and the hydroxyl groups (OH) of the polyol (ax) during the production of the urethane prepolymer (A) having a hydroxyl group.

**[Table 2-1]**

| Urethane prepolymer (A) having hydroxyl group | | A-1 | A-2 | A-3 | A-4 | A-5 | A-6 | A-7 | A-8 | A-9 | A-10 | A-11 | A-12 | A-13 | A-14 | A-15 |
|---|---|---|---|---|---|---|---|---|---|---|---|---|---|---|---|---|
| | ax-1 | 100 | | | | | | | | | | | | | | |
| | ax-2 | | 100 | | | | | | | | | | | | | |
| | ax-3 | | | 100 | | | | | | | | | | | | |
| | ax-4 | | | | 100 | | | | | | | | | | | |
| | ax-5 | | | | | 100 | | | | | | | | | | |
| | ax-6 | | | | | | 100 | | | | | | | | | |
| Polyol (ax) | ax-7 | | | | | | | 100 | | | | | | | | |
| | ax-8 | | | | | | | | 100 | | | | | | | |
| | ax-9 | | | | | | | | | 100 | | | | | | |
| | ax-10 | | | | | | | | | | 100 | | | | | |
| | ax-11 | | | | | | | | | | | 100 | | | | |
| | ax-12 | | | | | | | | | | | | 100 | | | |
| | ax-13 | | | | | | | | | | | | | 100 | | |
| | ax-14 | | | | | | | | | | | | | | 100 | |
| | ax-15 | | | | | | | | | | | | | | | 100 |
| Polyol (ay) | F-1010 | 12.1 | 12.5 | 12.2 | 19.2 | 11.6 | 5.4 | 19.2 | 11.6 | 5.4 | 9.0 | 2.6 | 11.6 | 35.3 | 9.0 | 18.8 |
| | PLACCEL 410 | | | | | | | | | | | | | | | |
| | GL-600 | | | | | | | | | | | | | | | |
| | GI-3000 | | | | | | | | | | | | | | | |
| Polyisocyanate (az) | HDI | 8.42 | 11.63 | 10.73 | 6.63 | 4.46 | 2.52 | 6.63 | 4.46 | 2.58 | 4.23 | 3.35 | 4.40 | 4.91 | 4.06 | 5.86 |
| | IPDI | | | | | | | | | | | | | | | |
| | XDI | | | | | | | | | | | | | | | |
| NCO/OH | | 0.65 | 0.63 | 0.71 | 0.50 | 0.71 | 0.78 | 0.50 | 0.71 | 0.80 | 0.75 | 0.83 | 0.70 | 0.40 | 0.72 | 0.51 |
| Mn × 10,000 | | 5 | 7 | 11 | 3 | 11 | 16 | 3 | 11 | 18 | 14 | 22 | 10 | 1 | 12 | 3 |
| Tg (°C) | | -10.0 | -55.0 | -30.8 | -52.0 | -43.5 | -51.0 | -12.6 | -10.0 | -10.0 | -29.2 | -23.6 | -28.0 | -20.3 | -23.4 | -36.2 |

**[Table 2-2]**

| Urethane prepolymer (A) having hydroxyl group | | A-16 | A-17 | A-18 | A-19 | A-20 | A-21 | A-22 | A-23 | A-24 | A-25 | A-26 | A-27 | A-28 |
|---|---|---|---|---|---|---|---|---|---|---|---|---|---|---|
| | ax-16 | 100 | | | | | | | | | | | | |
| | ax-17 | | 100 | | | | | | | | | | | |
| | ax-18 | | | 100 | | | | | | | 100 | | 100 | |
| Polyol (ax) | ax-19 | | | | 100 | | | | | | | | | |
| | ax-20 | | | | | 100 | | | | | | | | |
| | ax-21 | | | | | | 100 | | | | | 100 | | 100 |
| | ax-22 | | | | | | | 100 | | | | | | |
| | ax-23 | | | | | | | | 100 | | | | | |
| | ax-24 | | | | | | | | | 100 | | | | |
| Polyol (ay) | F-1010 | 9.0 | 9.0 | 18.8 | 11.5 | 11.6 | 11.5 | 11.6 | 11.6 | 11.7 | | | 11.9 | 11.6 |
| | PLACCEL 410 | | | | | | | | | | | | | |
| | GL-600 | | | | | | | | | | 11.9 | | | |
| | GI-3000 | | | | | | | | | | | 11.4 | | |
| Polyisocyanate (az) | HDI | 3.29 | 3.25 | 7.58 | 2.63 | 6.77 | 2.63 | 6.87 | 3.67 | 5.92 | 7.86 | 1.60 | | |
| | IPDI | | | | | | | | | | | | 8.50 | |
| | XDI | | | | | | | | | | | | | 2.89 |
| NCO/OH | | 0.73 | 0.72 | 0.66 | 0.51 | 0.70 | 0.51 | 0.71 | 0.71 | 0.61 | 0.67 | 0.50 | 0.66 | 0.50 |
| Mn × 10,000 | | 14 | 12 | 8 | 3 | 3 | 3 | 10 | 10 | 5 | 8 | 5 | 9 | 10 |
| Tg (°C) | | -15.0 | -38.3 | -15.0 | -38.3 | -15.0 | -40.8 | -16.6 | -40.8 | -16.6 | -17.0 | -40.4 | -15.0 | -40.4 |

**[Table 2-3]**

| Urethane prepolymer (A) having hydroxyl group | | A-29 | A-30 | A-31 | A-32 | A-33 | A-34 | A-35 | A-36 | A-37 | A-38 | A-39 | A-40 | A-41 | A-42 |
|---|---|---|---|---|---|---|---|---|---|---|---|---|---|---|---|
| | ax-25 | 100 | | | | | | | | | | | | | |
| | ax-26 | | 100 | | | | | | | | | | | | |
| | ax-27 | | | 100 | | | | | | | | | | | |
| | ax-28 | | | | 100 | | | | | | | | | | |
| | ax-29 | | | | | 100 | | | | | | | | | |
| Polyol (ax) | ax-30 | | | | | | 100 | | | | | | | | |
| | ax-31 | | | | | | | 100 | | | | | | | |
| | ax-32 | | | | | | | | 100 | | | | | | |
| | ax-33 | | | | | | | | | 100 | | | | | |
| | ax-34 | | | | | | | | | | 100 | | | | |
| | ax-35 | | | | | | | | | | | 100 | | | |
| | ax-36 | | | | | | | | | | | | 100 | | |
| | ax-37 | | | | | | | | | | | | | 100 | |
| | ax-38 | | | | | | | | | | | | | | 100 |
| Polyol (ay) | F-1010 | | | | | | | | | | | | | | |
| | PLACCEL 410 | 11.4 | 11.4 | 11.4 | 2.6 | 11.4 | 27.1 | 11.3 | 11.3 | 22.5 | 29.7 | 5.3 | 5.3 | 11.3 | 11.3 |
| | GL-600 | | | | | | | | | | | | | | |
| | GI-3000 | | | | | | | | | | | | | | |
| Polyisocyanate (az) | HDI | 2.84 | 2.93 | 2.94 | 0.37 | 2.84 | 8.25 | 1.82 | 1.80 | 2.44 | 5.13 | 0.79 | 0.67 | 1.82 | 1.82 |
| | IPDI | | | | | | | | | | | | | | |
| | XDI | | | | | | | | | | | | | | |
| NCO/OH | | 0.54 | 0.57 | 0.55 | 0.15 | 0.54 | 0.80 | 0.40 | 0.40 | 0.30 | 0.50 | 0.35 | 0.30 | 0.40 | 0.40 |
| Mn × 10,000 | | 9 | 12 | 10 | 2 | 9 | 18 | 12 | 12 | 3.8 | 22 | 18 | 5 | 12 | 12 |
| Tg (°C) | | -23.9 | -23.8 | -23.6 | -10.0 | -23.6 | -49.8 | -10.0 | -23.5 | -49.9 | -10.0 | -23.5 | -49.9 | -21.5 | -21.5 |

**[Table 2-4]**

| Urethane prepolymer (A) having hydroxyl group | | A-43 | A-44 | A-45 | A-46 | A-47 | A-48 | A-49 | A-50 | A-51 | A-52 | A-53 | A-54 | A-55 | A-56 | A-57 | A-58 | A-59 | AC-1 | AC-2 | AC-3 |
|---|---|---|---|---|---|---|---|---|---|---|---|---|---|---|---|---|---|---|---|---|---|
| | ax-39 | 100 | | | | | | | | | | | | | | | | | | | |
| | ax-40 | | 100 | | | | | | | | | | | | | | | | | | |
| | ax-41 | | | 100 | | | | | | | | | | | | | | | | | |
| | ax-42 | | | | 100 | | | | | | | | | | | | | | | | |
| | ax-43 | | | | | 100 | | | | | | | | | | | | | | | |
| | ax-44 | | | | | | 100 | | | | | | | | | | | | | | |
| | ax-45 | | | | | | | 100 | | | | | | | | | | | | | |
| | ax-46 | | | | | | | | 100 | | | | | | | | | | | | |
| | ax-47 | | | | | | | | | 100 | | | | | | | | | | | |
| Polyol (ax) | ax-48 | | | | | | | | | | 100 | | | | | | | | | | |
| | ax-49 | | | | | | | | | | | 100 | | | | | | | | | |
| | ax-50 | | | | | | | | | | | | 100 | | | | | | | | |
| | ax-51 | | | | | | | | | | | | | 100 | | | | | | | |
| | ax-52 | | | | | | | | | | | | | | 100 | | | | | | |
| | ax-53 | | | | | | | | | | | | | | | 100 | | | | | |
| | ax-54 | | | | | | | | | | | | | | | | 100 | | | | |
| | ax-55 | | | | | | | | | | | | | | | | | 100 | | | |
| | axc-1 | | | | | | | | | | | | | | | | | | 100 | | |
| | axc-2 | | | | | | | | | | | | | | | | | | | 100 | |
| | axc-3 | | | | | | | | | | | | | | | | | | | | 100 |
| Polyol (ay) | F-1010 | | | | | | | | | | | | | | | | | | | | |
| | PLACCEL 410 | 11.3 | 11.4 | 25.8 | 11.3 | 5.3 | 11.4 | 11.4 | 11.3 | 11.3 | 27.1 | 2.6 | 5.3 | 29.7 | 11.4 | 11.4 | 11.3 | 11.3 | | | |
| | GL-600 | | | | | | | | | | | | | | | | | | | | |
| | GI-3000 | | | | | | | | | | | | | | | | | | | | |
| Polyisocyanate (az) | HDI | 1.82 | 2.84 | 2.98 | 1.38 | 0.67 | 2.84 | 2.84 | 1.38 | 1.38 | 8.32 | 0.36 | 0.78 | 5.10 | 2.84 | 2.84 | 1.38 | 1.38 | 2.02 | 2.02 | 0.30 |
| | IPDI | | | | | | | | | | | | | | | | | | | | |
| | XDI | | | | | | | | | | | | | | | | | | | | |
| NCO/OH | | 0.40 | 0.54 | 0.30 | 0.33 | 0.30 | 0.54 | 0.54 | 0.33 | 0.33 | 0.80 | 0.15 | 0.35 | 0.50 | 0.54 | 0.54 | 0.33 | 0.33 | 0.60 | 0.60 | 0.90 |
| Mn × 10,000 | | 12 | 9 | 3.2 | 10 | 5 | 9 | 9 | 10 | 10 | 18 | 2 | 18 | 22 | 9 | 9 | 10 | 10 | 10 | 10 | 40 |
| Tg (°C) | | -23.5 | -48.0 | -10.0 | -48.2 | -10.0 | -48.0 | -10.0 | -48.2 | -10.0 | -49.8 | -10.0 | -49.9 | -10.0 | -48.0 | -10.0 | -48.2 | -10.0 | 10.0 | -64.5 | -18.5 |

### <5> Production Examples for Adhesive Agent Compositions and Adhesive Sheets

### (Example 1)

One hundred parts of the urethane prepolymer (A-1), 5.0 parts of HDI-TMP as the isocyanate curing agent (B), and ethyl acetate as a solvent in sufficient volume to achieve a non-volatile fraction of 50% were blended together and stirred using a disper, thus obtaining an adhesive agent composition.

A polyethylene terephthalate (PET) film (Lumirror T-60, manufactured by Toray Industries, Inc.) with a thickness of 50 µm was prepared as a substrate. Using a comma coater (a registered trademark), the adhesive agent composition prepared above was coated onto the substrate to form a coating layer. The coating was conducted at a coating speed of 3 m/minute across a width of 30 cm, so as to form a dried thickness of 25 µm. Subsequently, the formed coating layer was dried under conditions of 100°C for one minute using a drying oven, thus forming an adhesive layer. A commercially available release sheet with a thickness of 38 µm was bonded to this adhesive layer, and the resulting structure was cured for an additional one week under conditions of 23°C and 50% RH, thus obtaining an adhesive sheet 1.

### (Examples 2 to 82, Comparative Examples 1 to 4)

With the exception of altering the materials and blend amounts (parts by mass) from Example 1 as shown in Table 3, adhesive agent compositions and adhesive sheets of Examples 2 to 82 and Comparative Examples 1 to 4 were obtained in the same manner as Example 1.

### <6> Evaluations of Characteristics of Adhesive Agent Compositions

The degree of biomass and the biodegradable raw material usage ratio for the adhesive agent compositions obtained in Examples 1 to 82 and Comparative Examples 1 to 4 were calculated using the methods described below.

### <Degree of Biomass for Adhesive Agent>

The degree of biomass for an adhesive agent indicates the mass percentage of biomass-derived raw materials used when producing the adhesive agent relative to the total mass of the adhesive agent, and is calculated using a calculation formula (1) shown below. Each mass value represents a non-volatile fraction equivalent value. The degree of biomass is preferably at least 5%, more preferably at least 10%, and even more preferably 25% or higher. Degree of biomass for adhesive agent (% by mass) = 100 × [mass of biomass-derived raw materials (g)] / [total mass of adhesive agent (g)]

### <Biodegradable Raw Material Usage Ratio for Adhesive Agent>

The biodegradable raw material usage ratio for an adhesive agent indicates the mass percentage of biodegradable raw materials used when producing the adhesive agent relative to the total mass of the adhesive agent, and is calculated using a calculation formula (2) shown below. Each mass value represents a non-volatile fraction equivalent value. The usage ratio is preferably 60% or higher. Biodegradable raw material usage ratio for adhesive agent = 100 × [used mass % of biodegradable raw materials] / [100% by mass of adhesive agent]

### <7> Evaluations of Characteristics of Adhesive Sheets

Various characteristics of the adhesive sheets produced using the adhesive agent compositions obtained in Examples 1 to 82 and Comparative Examples 1 to 4 were evaluated in accordance with the methods described below. The results are shown in Table 3.

### <Adhesive Characteristics>

### [Peel Strength]

The adhesive sheets 1 produced in the examples and comparative examples were each cut to a size having a width of 25 mm and a length of 100 mm, and these cut strips were used as samples. Each of these samples was bonded to a stainless steel sheet (SUS 304) under an atmosphere at 23°C and 50% RH. Subsequently, compression bonding was performed with a 2 kg roller in accordance with JIS 0237, and the sample was then left to stand for 24 hours in an atmosphere at 23°C and 50% RH. Subsequently, a tensile tester was used to peel (180° peel) the adhesive sheet from the stainless steel sheet at each of two peel speeds, and the external appearances including the presence of adhesive residues were compared. The peel speeds were a low peel speed (0.3 m/minute) and a high peel speed (30 m/minute). The evaluation criteria were as follows.

### (Evaluation Criteria)

A: the adhesive sheet was able to be peeled with no contamination of the SUS sheet - Excellent
B: the SUS sheet was very slightly contaminated - Good
C: the SUS sheet was slightly contaminated - Practically applicable
D: the SUS sheet was contaminated - Impractical for use

### [Adhesive Strength]

The adhesive sheets 1 produced in the examples and comparative examples were each cut to a size having a width of 25 mm and a length of 100 mm, and these cut strips were used as samples. Subsequently, under an atmosphere at 23°C and 50% RH, the release sheet was removed from each sample and the exposed adhesive layer was bonded to a polished stainless steel (SUS) sheet in accordance with JIS Z 0237. Compression bonding was performed by rolling once back and forth with a 2 kg roller, and 24 hours after this compression bonding, a tensile tester was used to measure the adhesive strength (N/25mm) under conditions including a peel speed of 300 mm/minute and a peel angle of 180°. The evaluation criteria were as follows.

### (Evaluation Criteria)

A: adhesive strength of 15 N/25mm or higher - Excellent
B: adhesive strength of at least 10 N/25mm but less than 15 N/25mm - Good
C: adhesive strength of at least 5 N/25mm but less than 10 N/25mm - Practically applicable
D: adhesive strength of less than 5 N/25mm - Impractical for use

### [Holding Force]

The release sheet was removed from each of the adhesive sheets 1 produced in the examples and comparative examples, a portion of the exposed adhesive layer (the tip portion of the adhesive sheet with a width of 25 mm and a length of 25 mm) was bonded to a polished stainless steel (SUS) sheet, and compression bonding was performed by rolling once back and forth with a 2 kg roller. Subsequently, under an atmosphere at 80°, a 1 kg load was attached and held for a period of 70,000 seconds. In those cases where the sample fell from the SUS sheet, the evaluation indicates the number of seconds prior to falling. In those cases where the sample did not fall, the evaluation indicates the number of mm by which the adhered portion of the adhesive layer (the tip portion of the adhesive sheet) slipped down the SUS sheet under the load. The evaluation criteria were as follows.

### (Evaluation Criteria)

A: sample slippage of less than 2 mm - Excellent
B: sample slippage of at least 2 mm but less than 5 mm - Good
C: sample slippage of at least 5 mm, but sample did not fall - Practically applicable
D: sample fell - Impractical for use

### [Initial Curability]

A polyethylene terephthalate (PET) film (Lumirror T-60, manufactured by Toray Industries, Inc.) with a thickness of 50 µm was prepared as a substrate. Using a comma coater (a registered trademark), each of the adhesive agent compositions from the examples and comparative examples was coated onto the substrate at a coating speed of 30 m/minute across a width of 150 cm, so as to form a dried thickness of 25 µm, thus forming a coating layer. Subsequently, the formed coating layer was dried under conditions of 100°C for one minute using a drying oven, thus forming an adhesive layer. A commercially available release sheet with a thickness of 38 µm was bonded to this adhesive layer, and the resulting structure was cured for an additional one week under conditions of 23°C and 50% RH, thus obtaining an adhesive sheet 2.

Following removal of the release liner, the state of the adhesive layer surface (coating surface) of this adhesive sheet 2 was investigated by a finger tack test, and the presence or absence of adhesive residues on the finger was evaluated. The evaluation criteria were as follows.

### (Evaluation Criteria)

A: the adhesive agent was not transferred to the finger - Excellent
B: very slight transfer of the adhesive agent to the finger - Good
C: slight transfer of the adhesive agent to the finger - Practically applicable
D: transfer of the adhesive agent to the finger - Impractical for use

### <Moisture and Heat Resistance>

### [Substrate Contamination]

The adhesive sheets 1 produced in the examples and comparative examples were each cut to a size having a width of 25 mm and a length of 100 mm, and these cut strips were used as samples. Each of these samples was bonded to a stainless steel sheet (SUS 304) under an atmosphere at 23°C and 50% RH, and compression bonding was then performed with a 2 kg roller in accordance with JIS 0237. Subsequently, after leaving the sample to stand for 72 hours in an atmosphere at 60°C and 95% RH, the adhesive sheet was peeled off, and the surface of the SUS sheet following peeling was inspected visually to evaluate the removability of the adhesive layer. The evaluation criteria were as follows.

### (Evaluation Criteria)

A: no contamination of the SUS sheet - Excellent
B: very slight contamination of the SUS sheet - Good
C: slight contamination of the SUS sheet - Practically applicable
D: contamination of the SUS sheet - Impractical for use

### <Low-Temperature Resistance>

### [Substrate Adhesiveness]

The adhesive sheets 1 produced in the examples and comparative examples were each cut to a size having a width of 25 mm and a length of 100 mm, and these cut strips were used as samples. Subsequently, under an atmosphere at -5°C, the release sheet was removed from each sample, the exposed adhesive layer was bonded to a polished stainless steel sheet (SUS 304), and compression bonding was performed by rolling once back and forth with a 2 kg roller in accordance with JUS Z 0237. Twenty four hours after this compression bonding, a tensile tester was used to measure the adhesive strength (N/25mm) under conditions including a peel speed of 300 mm/minute and a peel angle of 180°. The evaluation criteria were as follows.

### (Evaluation Criteria)

A: adhesive strength of 15 N/25mm or higher - Excellent
B: adhesive strength of at least 10 N/25mm but less than 15 N/25mm - Good
C: adhesive strength of at least 5 N/25mm but less than 10 N/25mm - Practically applicable
D: adhesive strength of less than 5 N/25mm - Impractical for use

**[Table 3-1]**

| Adhesive agent composition | | | | | | | | | | | Evaluation results | | | | | |
|---|---|---|---|---|---|---|---|---|---|---|---|---|---|---|---|---|
| | Urethane prepolymer (A) having hydroxyl group | | Isocyanate curing agent (B) | | | Carbodiimide curing agent | Tackifier resin | | Biodegradable raw materials usage ratio | Degree of biomass | Adhesive characteristics | | | | Moisture and heat resistance | Low-temperature characteristics |
| | | | HDI-TMP | XDI-TMP | TDI-Nu | V-09B | A 75 | D 125 | | | Removability | Adhesive strength | Holding force | Initial curability | Substrate contamination | Substrate adhesiveness |
| Example 1 | A-1 | 100 | 5 | | | | | | 79% | 59% | C | C | A | A | C | C |
| Example 2 | A-2 | 100 | 5 | | | | | | 77% | 17% | C | C | A | A | C | C |
| Example 3 | A-3 | 100 | 5 | | | | | | 77% | 33% | C | C | A | A | C | B |
| Example 4 | A-4 | 100 | 5 | | | | | | 38% | 8% | B | B | A | A | B | C |
| Example 5 | A-5 | 100 | 5 | | | | | | 66% | 13% | B | A | A | A | B | B |
| Example 6 | A-6 | 100 | 5 | | | | | | 78% | 16% | C | B | A | A | C | C |
| Example 7 | A-7 | 100 | 5 | | | | | | 38% | 30% | B | B | A | A | B | C |
| Example 8 | A-8 | 100 | 5 | | | | | | 66% | 53% | B | A | A | A | B | C |
| Example 9 | A-9 | 100 | 5 | | | | | | 78% | 63% | C | B | A | A | C | C |
| Example 10 | A-10 | 100 | 5 | | | | | | 50% | 25% | B | A | A | A | B | B |
| Example 11 | A-11 | 100 | 5 | | | | | | 72% | 36% | B | C | B | B | B | B |
| Example 12 | A-12 | 100 | 5 | | | | | | 59% | 53% | C | A | A | A | B | B |
| Example 13 | A-13 | 100 | 5 | | | | | | 68% | 41% | B | C | A | A | B | B |
| Example 14 | A-14 | 100 | 5 | | | | | | 74% | 37% | C | A | A | A | B | B |
| Example 15 | A-15 | 100 | 5 | | | | | | 76% | 44% | B | B | A | A | B | B |
| Example 16 | A-16 | 100 | 5 | | | | | | 85% | 63% | B | A | A | A | B | B |
| Example 17 | A-17 | 100 | 5 | | | | | | 85% | 33% | B | A | A | A | B | A |
| Example 18 | A-18 | 100 | 5 | | | | | | 75% | 62% | B | A | A | A | B | A |
| Example 19 | A-19 | 100 | 5 | | | | | | 83% | 33% | B | B | A | A | B | A |
| Example 20 | A-20 | 100 | 5 | | | | | | 80% | 66% | B | A | A | A | B | A |
| Example 21 | A-21 | 100 | 5 | | | | | | 83% | 33% | B | B | A | A | B | A |
| Example 22 | A-22 | 100 | 5 | | | | | | 80% | 66% | B | A | A | A | B | A |
| Example 23 | A-23 | 100 | 5 | | | | | | 83% | 33% | A | A | A | A | B | A |
| Example 24 | A-24 | 100 | 5 | | | | | | 81% | 66% | A | A | A | A | B | A |
| Example 25 | A-25 | 100 | 5 | | | | | | 80% | 65% | B | A | A | A | B | A |
| Example 26 | A-26 | 100 | 5 | | | | | | 84% | 33% | B | B | A | A | B | A |
| Example 27 | A-27 | 100 | 5 | | | | | | 79% | 65% | B | A | A | A | B | A |
| Example 28 | A-28 | 100 | 5 | | | | | | 83% | 33% | B | A | A | A | B | A |
| Example 27a | A-19 | 100 | | 5 | | | | | 83% | 33% | B | B | A | A | B | A |
| Example 28a | A-19 | 100 | | | 5 | | | | 83% | 33% | B | B | A | A | B | A |
| Example 29 | A-19 | 100 | | | | 5 | | | 83% | 33% | B | B | C | A | B | A |
| Example 30 | A-19 | 100 | | | | | | | 88% | 34% | B | B | C | C | B | A |

**[Table 3-2]**

| Adhesive agent composition | | | | | | | | | | | Evaluation results | | | | | |
|---|---|---|---|---|---|---|---|---|---|---|---|---|---|---|---|---|
| | Urethane prepolymer (A) having hydroxyl group | | Isocyanate curing agent (B) | | | Carbodiimide curing agent | Tackifier resin | | Biodegradable raw materials usage ratio | Degree of biomass | Adhesive characteristics | | | | Moisture and heat resistance | Low-temperature characteristics |
| | | | HDI-TMP | XDI-TMP | TDI-Nu | V-09B | A 75 | D 125 | | | Removability | Adhesive strength | Holding force | Initial curability | Substrate contamination | Substrate adhesiveness |
| Example 31 | A-19 | 100 | 0.5 | | | | | | 87% | 34% | B | B | B | A | B | A |
| Example 32 | A-19 | 100 | 25 | | | | | | 76% | 30% | B | B | A | A | B | A |
| Example 33 | A-19 | 100 | | | | | 10 | | 80% | 40% | B | A | C | C | B | A |
| Example 34 | A-19 | 100 | 5 | | | | 20 | | 70% | 42% | B | A | A | A | B | A |
| Example 35 | A-19 | 100 | 5 | | | | | 40 | 60% | 47% | B | A | A | A | B | A |
| Example 36 | A-29 | 100 | 4 | | | | | | 94% | 46% | B | A | A | A | C | A |
| Example 37 | A-30 | 100 | 4 | | | | | | 94% | 45% | A | A | A | A | A | A |
| Example 38 | A-31 | 100 | 4 | | | | | | 94% | 43% | A | A | A | A | A | A |
| Example 39 | A-32 | 100 | 4 | | | | | | 96% | 66% | A | C | A | B | A | B |
| Example 40 | A-33 | 100 | 4 | | | | | | 94% | 43% | A | A | A | A | A | A |
| Example 41 | A-34 | 100 | 4 | | | | | | 90% | 15% | A | A | A | A | A | A |
| Example 42 | A-35 | 100 | 4 | | | | | | 95% | 60% | A | A | A | A | A | B |
| Example 43 | A-36 | 100 | 4 | | | | | | 95% | 43% | A | A | A | A | A | A |
| Example 44 | A-37 | 100 | 4 | | | | | | 94% | 16% | A | B | A | A | A | A |
| Example 45 | A-38 | 100 | 4 | | | | | | 92% | 50% | A | C | B | A | A | B |
| Example 46 | A-39 | 100 | 4 | | | | | | 95% | 46% | A | A | A | B | A | A |
| Example 47 | A-40 | 100 | 4 | | | | | | 96% | 19% | A | A | A | B | A | A |
| Example 48 | A-41 | 100 | 4 | | | | | | 95% | 43% | A | A | A | A | A | B |
| Example 49 | A-42 | 100 | 4 | | | | | | 95% | 43% | A | A | A | A | A | B |
| Example 50 | A-43 | 100 | 4 | | | | | | 95% | 43% | A | A | A | A | A | B |
| Example 51 | A-44 | 100 | 4 | | | | | | 94% | 18% | B | A | A | A | A | B |
| Example 52 | A-45 | 100 | 4 | | | | | | 94% | 53% | B | B | A | A | A | C |
| Example 53 | A-46 | 100 | 4 | | | | | | 95% | 17% | B | A | A | A | A | B |
| Example 54 | A-47 | 100 | 4 | | | | | | 96% | 64% | B | A | A | B | A | C |
| Example 55 | A-48 | 100 | 4 | | | | | | 94% | 18% | B | A | A | A | A | B |
| Example 56 | A-49 | 100 | 4 | | | | | | 94% | 59% | B | A | A | A | A | B |
| Example 57 | A-50 | 100 | 4 | | | | | | 95% | 17% | B | A | A | A | A | B |
| Example 58 | A-51 | 100 | 4 | | | | | | 95% | 60% | B | A | A | A | A | C |
| Example 59 | A-52 | 100 | 4 | | | | | | 90% | 15% | B | A | A | A | A | A |
| Example 60 | A-53 | 100 | 4 | | | | | | 96% | 66% | B | C | A | B | A | B |

**[Table 3-3]**

| Adhesive agent composition | | | | | | | | | | | Evaluation results | | | | | |
|---|---|---|---|---|---|---|---|---|---|---|---|---|---|---|---|---|
| | Urethane prepolymer (A) having hydroxyl group | | Isocyanate curing agent (B) | | | Carbodiimide curing agent | Tackifier resin | | Biodegradable raw materials usage ratio | Degree of biomass | Adhesive characteristics | | | | Moisture and heat resistance | Low-temperature characteristics |
| | | | HDI-TMP | XDI-TMP | TDI-Nu | V-09B | A 75 | D 125 | | | Removability | Adhesive strength | Holding force | Initial curability | Substrate contamination | Substrate adhesiveness |
| Example 61 | A-54 | 100 | 4 | | | | | | 95% | 19% | B | A | A | B | A | A |
| Example 62 | A-55 | 100 | 4 | | | | | | 93% | 50% | B | C | B | A | A | B |
| Example 63 | A-56 | 100 | 4 | | | | | | 94% | 18% | B | A | A | A | A | A |
| Example 64 | A-57 | 100 | 4 | | | | | | 94% | 59% | B | A | A | A | A | B |
| Example 65 | A-58 | 100 | 4 | | | | | | 95% | 17% | B | A | A | A | A | A |
| Example 66 | A-59 | 100 | 4 | | | | | | 95% | 60% | B | A | A | A | A | B |
| Example 67 | A-33 | 100 | | 4 | | | | | 94% | 43% | A | A | A | A | A | A |
| Example 68 | A-44 | 100 | | 4 | | | | | 94% | 18% | B | A | A | A | A | B |
| Example 69 | A-48 | 100 | | 4 | | | | | 94% | 18% | B | A | A | A | A | B |
| Example 70 | A-56 | 100 | | 4 | | | | | 94% | 18% | B | A | A | A | A | A |
| Example 71 | A-33 | 100 | | | | | | | 98% | 45% | A | A | C | C | A | A |
| Example 72 | A-44 | 100 | | | | | | | 98% | 19% | B | A | C | C | A | B |
| Example 73 | A-48 | 100 | | | | | | | 98% | 19% | B | A | C | C | A | B |
| Example 74 | A-56 | 100 | | | | | | | 98% | 19% | B | A | C | C | A | A |
| Example 75 | A-33 | 100 | 0.5 | | | | | | 97% | 44% | A | A | B | A | A | A |
| Example 76 | A-44 | 100 | 0.5 | | | | | | 97% | 19% | B | A | B | A | A | B |
| Example 77 | A-48 | 100 | 0.5 | | | | | | 97% | 19% | B | A | B | A | A | B |
| Example 78 | A-56 | 100 | 0.5 | | | | | | 97% | 19% | B | A | B | A | A | A |
| Example 79 | A-33 | 100 | 25 | | | | | | 78% | 36% | A | A | A | A | A | A |
| Example 80 | A-44 | 100 | 25 | | | | | | 78% | 15% | B | A | A | A | A | B |
| Example 81 | A-48 | 100 | 25 | | | | | | 78% | 15% | B | A | A | A | A | B |
| Example 82 | A-56 | 100 | 25 | | | | | | 78% | 15% | B | A | A | A | A | A |
| Comparative Example 1 | AC-1 | 100 | | | | | | | 98% | 98% | B | D | D | B | C | D |
| Comparative Example 2 | AC-2 | 100 | | | | | | | 98% | 1% | C | C | D | D | B | C |
| Comparative Example 3 | AC-3 | 100 | | | | | | | 100% | 50% | D | C | D | C | D | B |

As shown in Table 3, as a result of containing the specific urethane prepolymer (A), the adhesive agent compositions of the present invention (the examples) exhibited satisfactory adhesive characteristics, displayed excellent substrate contamination properties in moisture and heat resistance testing, and also exhibited excellent substrate adhesiveness at low temperature, even when the degree of biomass of the adhesive agent and the usage ratio of biodegradable raw materials in the adhesive agent were high.

In particular, with regards the substrate adhesiveness at low temperature, it was confirmed that even more superior substrate adhesiveness was obtained when, among the lactides (ax'1-2), a combination of L-lactide and D-lactide was used, or DL-lactide or meso-lactide was used. Moreover, it was also confirmed that in those cases where meso-lactide was used, particularly superior results for the removability could also be obtained.

In contrast, with the adhesive agent compositions of the comparative examples, achieving the desired adhesive characteristics, and the desired levels of substrate contamination in moisture and heat resistance testing and substrate adhesiveness at low temperature was problematic. In the case of Comparative Examples 1 and 2, a combination of the monomer (ax'1) having a lactic acid unit and the monomer (ax'2) having at least one of a lactone unit and an aliphatic hydroxycarboxylic acid unit was not used in the preparation of the polyol (ax). Further, in Comparative Example 3, the number average molecular weight of the polyol (ax) was outside the range specified in the present invention.

Based on the above results, it is evident that by using the specific urethane prepolymer (A), the adhesive agent composition of the present invention is able to achieve the desired adhesive characteristics, substrate contamination properties in moisture and heat resistance testing, and substrate adhesiveness at low temperature.

## Claims

1. An adhesive agent composition comprising a urethane prepolymer A having a hydroxyl group that is a reaction product of a polyol ax having a number average molecular weight within a range from 1,000 to 45,000, a polyfunctional polyol ay excluding the polyol ax, and a polyisocyanate az, wherein the number average molecular weight is determined as specified in the description, wherein
the polyol ax is a copolymer of a monomer mixture comprising a monomer ax'1 having a lactic acid unit, and a monomer ax'2 having at least one of a lactone unit and an aliphatic hydroxycarboxylic acid unit but excluding lactic acid, and
the urethane prepolymer A having a hydroxyl group has a glass transition temperature within a range from -60°C to -10°C, wherein the glass transition temperature is determined as specified in the description,
wherein, based on a total mass of the monomer mixture that constitutes the polyol ax, a total content of the monomer ax'1 and the monomer ax'2 is within a range from 10 to 99.8% by mass,
wherein a ratio ax'1/ax'2 between an amount of the monomer ax'1 and an amount of the monomer ax'2 in the monomer mixture that constitutes the polyol ax is within a range from 10/90 to 90/10,
wherein a molar ratio NCO/OH of isocyanate groups in the polyisocyanate az relative to a total of all hydroxyl groups of the polyol ax and the polyfunctional polyol ay is within a range from 0.1 to 0.9,
wherein the monomer mixture that constitutes the polyol ax also comprises a monomer ax'3 capable of reacting with the monomer ax'1 and the monomer ax'2.

2. The adhesive agent composition according to Claim 1, further comprising an isocyanate curing agent B.

3. The adhesive agent composition according to Claim 1 or 2, wherein the urethane prepolymer A having a hydroxyl group has a weight average molecular weight within a range from 10,000 to 200,000, wherein the weight average molecular weight is determined as specified in the description.

4. The adhesive agent composition according to any one of Claims 1 to 3, wherein the monomer ax'2 comprises at least meso-lactide.

5. The adhesive agent composition according to any one of Claims 1 to 4, wherein
the monomer ax'3 comprises a polyester polyol having a number average molecular weight within a range from 150 to 3,000, preferably within a range from 200 to 2,000, wherein the number average molecular weight is determined as specified in the description.

6. An adhesive sheet having a substrate, and an adhesive layer formed from the adhesive agent composition according to any one of Claims 1 to 5 provided on at least one surface of the substrate.

## Patentansprüche

1. Klebstoffzusammensetzung, umfassend ein Urethan-Prepolymer A mit einer Hydroxylgruppe, das ein Reaktionsprodukt eines Polyols ax mit einem zahlenmittleren Molekulargewicht in einem Bereich von 1.000 bis 45.000, eines polyfunktionellen Polyols ay, ausgenommen das Polyol ax, und eines Polyisocyanats az ist, wobei das zahlenmittlere Molekulargewicht wie in der Beschreibung angegeben bestimmt wird, wobei
das Polyol ax ein Copolymer aus einer Monomermischung ist, die ein Monomer ax'1 mit einer Milchsäureeinheit und ein Monomer ax'2 mit mindestens einer Lactoneinheit und einer aliphatischen Hydroxycarbonsäureeinheit, aber ausgenommen Milchsäure, umfasst, und
das Urethan-Prepolymer A mit einer Hydroxylgruppe eine Glasübergangstemperatur innerhalb eines Bereichs von -60°C bis -10°C aufweist, wobei die Glasübergangstemperatur wie in der Beschreibung angegeben bestimmt wird,
wobei, basierend auf der Gesamtmasse der Monomermischung, die das Polyol ax bildet, der Gesamtgehalt des Monomers ax'1 und des Monomers ax'2 innerhalb eines Bereichs von 10 bis 99,8 Massenprozent liegt,
wobei ein Verhältnis ax'1/ax'2 zwischen einer Menge des Monomers ax'1 und einer Menge des Monomers ax'2 in der Monomermischung, die das Polyol ax bildet, in einem Bereich von 10/90 bis 90/10 liegt,
wobei das Molverhältnis NCO/OH der Isocyanatgruppen in dem Polyisocyanat az relativ zu einer Gesamtheit aller Hydroxylgruppen des Polyols ax und des polyfunktionellen Polyols ay im Bereich von 0,1 bis 0,9 liegt,
wobei die Monomermischung, die das Polyol ax bildet, auch ein Monomer ax'3 umfasst, das in der Lage ist, mit dem Monomer ax'1 und dem Monomer ax'2 zu reagieren.

2. Klebstoffzusammensetzung nach Anspruch 1, die ferner einen Isocyanat-Härter B enthält.

3. Klebstoffzusammensetzung nach Anspruch 1 oder 2, wobei das Urethan-Prepolymer A mit einer Hydroxylgruppe ein gewichtsmittleres Molekulargewicht in einem Bereich von 10.000 bis 200.000 aufweist, wobei das gewichtsmittlere Molekulargewicht wie in der Beschreibung angegeben bestimmt wird.

4. Klebstoffzusammensetzung nach einem der Ansprüche 1 bis 3, wobei das Monomer ax'2 mindestens meso-Lactid umfasst.

5. Klebstoffzusammensetzung nach einem der Ansprüche 1 bis 4, wobei
das Monomer ax'3 ein Polyesterpolyol mit einem zahlenmittleren Molekulargewicht in einem Bereich von 150 bis 3.000, vorzugsweise in einem Bereich von 200 bis 2.000, umfasst, wobei das zahlenmittlere Molekulargewicht wie in der Beschreibung angegeben bestimmt wird.

6. Klebefolie mit einem Substrat und einer aus der Klebstoffzusammensetzung nach einem der Ansprüche 1 bis 5 gebildeten Klebstoffschicht, die auf mindestens einer Oberfläche des Substrats vorgesehen ist.

## Revendications

1. Composition d'agent adhésif comprenant un prépolymère uréthane A présentant un groupe hydroxyle qui est un produit de réaction d'un polyol ax présentant un poids moléculaire moyen en nombre dans une plage de 1 000 à 45 000, un polyol polyfonctionnel ay à l'exclusion du polyol ax, et un polyisocyanate az, dans laquelle le poids moléculaire moyen en nombre est déterminé comme spécifié dans la description, dans laquelle
le polyol ax est un copolymère d'un mélange de monomères comprenant un monomère ax'1 présentant un motif acide lactique, et un monomère ax'2 présentant au moins un motif lactone et un motif acide hydroxycarboxylique aliphatique, mais à l'exclusion de l'acide lactique, et
le prépolymère uréthane A présentant un groupe hydroxyle présente une température de transition vitreuse dans une plage de -60 °C à -10 °C, dans laquelle la température de transition vitreuse est déterminée comme spécifié dans la description,
dans laquelle, sur la base d'une masse totale du mélange de monomères qui constitue le polyol ax, une teneur totale du monomère ax'1 et du monomère ax'2 est dans une plage de 10 à 99,8 % en masse,
dans laquelle un rapport ax'1/ax'2 entre une quantité du monomère ax'1 et une quantité du monomère ax'2 dans le mélange de monomères qui constitue le polyol ax est dans une plage de 10/90 à 90/10,
dans laquelle un rapport molaire NCO/OH des groupes isocyanate dans le polyisocyanate az par rapport à un total de tous les groupes hydroxyle du polyol ax et du polyol polyfonctionnel ay est dans une plage de 0,1 à 0,9,
dans laquelle le mélange de monomères qui constitue le polyol ax comprend également un monomère ax'3 capable de réagir avec le monomère ax'1 et le monomère ax'2.

2. Composition d'agent adhésif selon la revendication 1, comprenant en outre un agent de durcissement isocyanate B.

3. Composition d'agent adhésif selon la revendication 1 ou 2, dans laquelle le prépolymère uréthane A présentant un groupe hydroxyle présente un poids moléculaire moyen en poids dans une plage de 10 000 à 200 000, dans laquelle le poids moléculaire moyen en poids est déterminé comme spécifié dans la description.

4. Composition d'agent adhésif selon l'une quelconque des revendications 1 à 3, dans laquelle le monomère ax'2 comprend au moins du méso-lactide.

5. Composition d'agent adhésif selon l'une quelconque des revendications 1 à 4, dans laquelle
le monomère ax'3 comprend un polyester polyol présentant un poids moléculaire moyen en nombre dans une plage de 150 à 3 000, préférablement dans une plage de 200 à 2 000, dans laquelle le poids moléculaire moyen en nombre est déterminé comme spécifié dans la description.

6. Feuille adhésive présentant un substrat, et une couche adhésive formée à partir de la composition d'agent adhésif selon l'une quelconque des revendications 1 à 5 prévue sur au moins une surface du substrat.
